# EUROPÄISCHE PATENTSCHRIFT

(11) **EP 4 103 765 B1**
(45) Veröffentlichungstag und Bekanntmachung des Hinweises auf die Patenterteilung: **21.02.2024**
(21) Anmeldenummer: 20829178.1
(22) Anmeldetag: 20.11.2020
(51) Int. Cl.: C25B 1/044, C25B 9/015, C25B 9/05, C25B 9/07, C25B 9/15, C25B 9/70, C25B 11/02, C25B 15/08, F02B 43/10

(54) **ELEKTROLYTISCHES REAKTIONSSYSTEM ZUR ERZEUGUNG VON GASFÖRMIGEM WASSERSTOFF UND SAUERSTOFF**
ELECTROLYTIC REACTION SYSTEM FOR PRODUCING GASEOUS HYDROGEN AND OXYGEN
SYSTÈME RÉACTIONNEL ÉLECTROLYTIQUE POUR LA PRODUCTION D'HYDROGÈNE ET D'OXYGÈNE SOUS FORME GAZEUSE

(30) Priorität: 22.11.2019 AT 510112019
(43) Veröffentlichungstag der Anmeldung: 21.12.2022
(73) Patentinhaber: ASA-Energie GmbH, 4694 Ohlsdorf (AT)
(72) Erfinder: REBROV, Oleksii, 21144 Malmö (SE); HEIDER, Michael, 4563 Micheldorf (AT); ASAMER, Johannes, 4694 Ohlsdorf (AT)
(74) Vertreter: Burger, Hannes
(86) Internationale Anmeldenummer: PCT/AT2020/060413
(87) Internationale Veröffentlichungsnummer: WO 2021/102494

(56) Entgegenhaltungen:
- WO-A1-2011/038432
- WO-A1-2011/131868
- WO-A1-2018/124643
- RU-C1- 2 227 817
- RU-C1- 2 253 700
- US-A- 3 990 962
- US-A- 4 113 601
- US-A1- 2004 108 203
- US-A1- 2010 320 083

## Beschreibung

Die Erfindung betrifft ein elektrolytisches Reaktionssystem zur Erzeugung von gasförmigem Wasserstoff und Sauerstoff, wie es in den Ansprüchen angegeben ist.

Die WO 2011/131868 A1 offenbart eine Elektrolysevorrichtung zur Erzeugung von gasförmigem Wasserstoff und Sauerstoff aus einem wässrigen Medium. Die Elektrolysevorrichtung umfasst trichterförmig bzw. kegelstumpfförmig ausgebildete Elektroden, welche Elektroden in Bezug auf eine Vertikalachse koaxial angeordnet sind. Zwischen den einander zugewandten Mantelflächen der Elektroden sind in Bezug auf die Vertikalrichtung konstant bleibende Spaltbreiten zur Ausbildung von kegelförmigen Elektrolyt-Aufnahmekammern ausgebildet.

Die RU 2 227 817 C1, US 2010/320083 A1 und US 4 113 601 A offenbaren gleichfalls Elektrolysevorrichtungen mit trichter- bzw. kegelstumpfförmigen Elektroden, welche koaxial zu einer gemeinsamen Vertikalachse angeordnet und ineinander gestapelt sind. Die Spaltbreiten zwischen den Mantelflächen benachbarter Elektroden sind dabei ebenso konstant ausgebildet.

Die WO 2018/124643 A1 beschreibt eine Vorrichtung zur Herstellung von Wasserstoffwasser, indem erzeugter Wasserstoff in Wasser gelöst wird. Diese Vorrichtung zur Herstellung von Wasserstoffwasser umfasst einen Elektrolytbehälter mit einem sich in Vertikalrichtung von oben nach unten verjüngenden Strömungskanal zum Lösen von Wasserstoff im Wasser. Der Wasserstoff wird durch die Elektrolyse von der Vorrichtung zugeführtem Rohwasser in einem Elektrolyseteil erzeugt. Der Elektrolyseteil umfasst eine Ionenaustauschermembran, einen ersten Elektrodenteil in dem die Oxidationsreaktion auftritt, und einen zweiten Elektrodenteil, welcher eine andere Polarität als der erste Elektrodenteil aufweist und die Reduktionsreaktion erzeugt. Zudem ist ein EDLC-Bildungselektrodenteil ausgebildet, der in dem Elektrolytbehälter mit dem sich von oben nach unten verjüngenden Spalt im Abstand von dem zweiten Elektrodenteil des Elektrolyseteils angeordnet ist und ein Potential aufweist, das niedriger ist als das Potential des zweiten Elektrodenteils innerhalb eines Bereichs, der die Elektrolyse zwischen dem zweiten Elektrodenteil und dem EDLC-Bildungselektrodenteil verhindert. Die Elektrolyse von Wasser zur Erzeugung von Wasserstoff und Sauerstoff findet somit in einem ersten Abschnitt der Vorrichtung statt und wird die Lösung des erzeugten Wasserstoffs in dem Wasser in einem sich in Vertikalrichtung von oben nach unten verjüngenden Strömungskanal ausgeführt, welcher Strömungskanal zur noch besseren Durchmischung von Wasserstoff und Wasser zudem eine spiralförmiges Element mit einer sich verändernden Steigung aufweisen kann.

Die RU 2 253 700 C1 und die US 3 990 962 A offenbaren weitere Elektrolysevorrichtungen mit hohlzylindrischen, koaxial ineinander gestellten Elektroden.

Die WO 2011/038432 A1 beschreibt eine Elektrolysevorrichtung mit hohlzylindrischen, koaxial ineinander gestellten Elektroden, wobei im oberen und/oder unteren axialen Endabschnitt dieser Elektrodenanordnung wenigstens eine elektromagnetische Spule ausgebildet ist. Die wenigstens eine elektromagnetische Spule ist zur Unterstützung der Ablösung von an den Elektrodenoberflächen anhaftenden Gasblasen vorgesehen.

Die US 2004/108203 A1 offenbart eine Elektrolysevorrichtung zur Konvertierung von Wasser in Wasserstoff und Sauerstoff. Die Elektrolysevorrichtung umfasst elektromagnetische Spulen, deren elektromagnetisches Feld die Ablösung von Gasblasen von den Elektroden unterstützen soll.

Die Erfindung bezieht sich im speziellen auf ein System zur hocheffizienten Erzeugung von gasförmigem Wasserstoff und Sauerstoff mittels einem Elektrolyseprozess in einer Reaktionskammer, wobei das Ziel einer optimalen Nutzung der eingesetzten elektrischen Energie zur Aufspaltung von Wasser in gasförmigen Wasserstoff und Sauerstoff verfolgt und erreicht wird. Darüber hinaus bezieht sich die Erfindung auf die Nutzung dieser Gase, insbesondere auf die Nutzung des Energieträgers Wasserstoff für chemische Verbrennungen bzw. Oxidationen. Insbesondere wird Wasser durch Elektrolyse in gasförmigen Wasserstoff und Sauerstoff zerlegt, woraufhin der chemische Energieträger Wasserstoff durch einen Verbrennungsvorgang in thermische Energie bzw. in kinetische Energie umgewandelt wird. Die Zerlegung von Wasser in die genannten Gase erfolgt dabei mit einer möglichst guten Energiebilanz. Darüber hinaus sind mit diesem Elektrolyseprozess innerhalb relativer kurzer Zeitspannen große Mengen an elektrolytisch erzeugtem, gasförmigem Wasserstoff und Sauerstoff produzierbar.

Die erfindungsgemäße Technologie reduziert dabei die eingesetzte bzw. erforderliche elektrische Energie, welche zur Aufspaltung von Wasser in Wasserstoff und Sauerstoff benötigt wird, um eine möglichst gute bzw. wirtschaftlich positive Energiebilanz bei der Herstellung des chemischen Energieträgers zu erreichen bzw. um eine wirtschaftliche und zugleich umweltschonende Nutzung des gasförmigen Brennstoffes Wasserstoff bzw. der daraus gewonnenen thermischen oder kinetischen Energie zu erzielen.

Die erfindungsgemäße Technik wurde mit dem Ziel geschaffen, bevorzugt aus natürlich vorkommendem Wasser oder aus wässrigen, elektrolytischen Lösungen, Wasserstoffgas und Sauerstoffgas zu erzeugen, und zwar in einer Menge, die es ermöglicht, den erzeugten chemischen Energieträger Wasserstoff ohne großvolumiger oder technisch aufwändiger Zwischenlagerung einem Verbraucher, insbesondere einer Nutzungsvorrichtung bzw. einer Umwandlungsvorrichtung zur Verfügung zu stellen. Die entsprechende Nutzungsvorrichtung wandelt sodann diesen chemischen Energieträger bzw. Brennstoff durch einen Verbrennungsprozess in die jeweils benötigte Energieform, insbesondere in thermische bzw. kinetische Energie oder auch in elektrische Energie um.

Der erfindungsgemäß gewonnene chemische Energieträger in Form von Wasserstoffgas, insbesondere der gasförmige Wasserstoff in Verbindung mit dem gasförmigen Sauerstoff, ermöglicht dabei eine Nutzung bzw. Energieumwandlung ohne die üblicherweise auftretenden Emissionswerte bei der Verbrennung von fossilen Brennstoffen. Bei Nutzung des erfindungsgemäßen Systems entstehen neben der jeweils gewünschten Energieform lediglich Wasserdampf oder kondensiertes Wasser und sonstige Spurenelemente. Die Nebenprodukte bei der thermischen Verbrennung von Wasserstoffgas, insbesondere bei der Nutzung von dessen Energie, sind im Vergleich zu fossilen Brennstoffen bekanntermaßen deutlich umweltschonender. Das primäre Abfallprodukt aus dem Verbrennungsprozess von Wasserstoff ist nämlich lediglich Wasserdampf bzw. Wasser, welches problemlos an die Umwelt abgegeben werden kann. Dieses Abfallprodukt ist dabei reiner als viele andere Wasservorkommen bzw. ist der elektrolytisch erzeugte Sauerstoff reiner bzw. konzentrierter als die sonstige Luft in der Umwelt.

Das erfindungsgemäße System und die erfindungsgemäßen Verfahrensmaßnahmen sind das Resultat von zahlreichen Testreihen und Experimenten mit verschiedensten Aufbauten und Betriebsweisen dieser Aufbauten zur Wasserstofferzeugung nach dem Prinzip der Elektrolyse, welche hinsichtlich ihrer physikalischen Grundsätze seit mehr als einem Jahrhundert bekannt ist.

Die Elektrolyse von Wasser ist ein grundsätzlich sehr einfaches, bekanntes Prinzip, bei welchem durch zwei bzw. durch mehrere in einem Elektrolyt- oder Wasserbad befindliche Elektroden und durch Anlegen von elektrischer Energie, insbesondere von Gleichspannung, die Aufspaltung von Wasser in gasförmigen Wasserstoff und Sauerstoff bewerkstelligt wird. Dieser Prozess ist grundsätzlich nichts Neues. Allerdings sind die bekannten Prozesse relativ uneffizient, nachdem sie zur Aufspaltung deutlich mehr Primärenergie benötigt haben, als durch die Nutzung der thermischen bzw. chemischen Energie des erzeugten Gases bzw. durch einen Verbrennungsprozess des erzeugten Gases später zur Verfügung stand. Es wurde bislang also eine wirtschaftlich ziemlich negative bzw. schlechte Energiebilanz erzielt. Andererseits musste ein derart hohes Ausmaß an elektrischer Energie zugeführt werden, dass die resultierenden Vorteile nicht erkennbar waren bzw. verschwunden sind, nachdem elektrische Energie zu einem hohen Anteil aus der Verbrennung von fossilen Brennstoffen erzeugt wird. Umwelttechnisch betrachtet haben also die aus dem Stand der Technik bekannten Systeme keine herausragenden Vorteile erbracht. Aus diesem Grund hat sich die Nutzung von Wasserstoff und dessen Energiepotential in der Praxis nie bzw. nur auf sehr begrenzten Anwendungsgebieten durchgesetzt.

Aus dem vorbekannten Stand der Technik sind zahlreiche Ausführungen von Elektrolyseapparaturen bekannt. Offenbar ist aber keine dieser Vorrichtungen in der Lage, für ein breit gefächertes Anwendungsspektrum eingesetzt zu werden. Beispielsweise für die Energieversorgung von Kraftfahrzeugen, Stromgeneratoren oder Heizungssystemen sind diese vorbekannten Ausgestaltungen offensichtlich nicht zufriedenstellend, nachdem Antriebs- bzw. Versorgungssysteme basierend auf elektrolytisch gewonnenem Wasserstoff bzw. auf einem Wasserstoff-Sauerstoff-Gemisch standardmäßig überhaupt nicht vorhanden sind bzw. nur im Versuchsstadium aufzufinden sind.

Die erfindungsgemäße Technologie ermöglicht es nun, mit einem speziellen Aufbau bzw. mit speziellen Maßnahmen aus Wasser bzw. aus auf Wasser basierenden Lösungen den gasförmigen Wasserstoff und Sauerstoff in der jeweils benötigten Menge zur Verfügung zu stellen, d.h. ohne großvolumiger bzw. technisch komplexer Zwischenlagerung bedarfsgerecht und reaktionsschnell bereit zu stellen. Insbesondere wird bei der Erzeugung des chemischen Energieträgers, insbesondere bei der elektrolytischen Gewinnung des Wasserstoffgases, eine wirtschaftlich positive Energiebilanz erzielt und die Erzeugung der chemischen Energie mit reduziertem Einsatz von Primärenergie gewährleistet. Die letztendlich generierbare Thermal- bzw. Wärmeenergie, welche aus der emissionslosen Verbrennung von Wasserstoff und Sauerstoff gewonnen wird, ist dabei sehr vielseitig nutzbar. Fast alle Geräte im Haushalt oder in der Industrie, wie z.B. Öfen, Griller, Heizungen, Klimaanlagen und auch Stromgeneratoren, können mit dieser chemischen Energie betrieben werden und dabei für eine Umwandlung in elektrische, kinetische und/oder thermische Energie oder für eine Konvertierung in sonstige Energieformen sorgen. Wasserstoff und Sauerstoff kann außerdem zum Betrieb von nahezu allen herkömmlichen Verbrennungskraftmaschinen verwendet werden.

Die Elektrolyse-Technologie, insbesondere das erfindungsgemäße elektrolytische Reaktionssystem bietet die Chance der Nutzung der chemischen Energie bzw. der Thermal- bzw. Wärmeenergie aus Wasserstoff und Sauerstoff, ohne dabei die Umwelt stark zu belasten, wie dies durch die heutzutage übliche Verbrennung von fossilen Brennstoffen geschieht.

Die entsprechende Technologie ist sicherer als viele bisher bekannte Systeme zum Betreiben von Motoren, zur Stromerzeugung, für Heizungszwecke und dergleichen. Diese Systeme benötigen zum Betrieb jeweils Brennstoffe, welche in Tanks bzw. Zuleitungssystemen enthalten sind. In diesen Komponenten wird eine unvergleichlich große Menge an Verbrennungsenergie gelagert bzw. vorrätig gehalten. In Störfallen, welche in der Praxis immer wieder auftreten, verursacht dies relativ oft schwerwiegende Probleme. Insbesondere werden durch die unmittelbare Bevorratung des Brenn- bzw. Kraftstoffes teilweise ungeahnte Folgen ausgelöst. Solche Störfälle sind meist relativ schwerwiegend bzw. nur mit relativ hohem technischen Aufwand einigermaßen zu beherrschen.

Beim erfindungsgemäßen System wird nur eine relativ geringe, insbesondere eine wesentlich kleinere Menge an brennbarem Gas im System bevorratet. Die einzige Bevorratung in Tanks oder in Leitungen erfolgt in Form von relativ unkritischen wässrigen Lösungen oder in Form von reinem Wasser, welches chemisch bzw. umwelttechnisch unproblematisch und selbstverständlich unbrennbar ist. Außerdem können dem Erzeugungsprozess, insbesondere der Reaktionskammer in einfacher Art und Weise wirkungsvolle Sicherheitseinrichtungen zugeordnet werden, welche zuverlässig und kostengünstig sind. Das erfindungsgemäße, besonders reaktionsschnelle bzw. leistungsfähige Elektrolysesystem macht es möglich, nur relativ geringe Gasmengen bevorraten zu müssen. Insbesondere ist ein Speicher- bzw. Puffervolumen umfassend die Reaktionskammer und die Zuleitungssysteme in den meisten Fällen ausreichend. Dadurch ist dieses Elektrolysesystem bzw. die angegebene Vorrichtung zur Energieumwandlung leicht beherrschbar und das erfindungsgemäße System als sehr sicher einzustufen.

Der vorliegenden Erfindung liegt die Aufgabe zu Grunde, ein verbessertes, elektrolytisches Reaktionssystem zu schaffen. Insbesondere ist ein elektrolytisches System zur Zerlegung von Wasser oder wässrigen Lösungen in gasförmigen Wasserstoff und Sauerstoff angestrebt, welches eine erhöhte Effizienz bzw. einen hohen Wirkungsgrad in Bezug auf die zugeführte, elektrische Energiemenge und die generierte bzw. umgewandelte, chemische bzw. thermische oder kinetische Energiemenge aufweist.

Diese Aufgabe der Erfindung wird durch ein elektrolytisches Reaktionssystem entsprechend den Merkmalen des Anspruches 1 gelöst.

Ein sich durch die Merkmale des Anspruches 1 ergebender, überraschender Vorteil liegt darin, dass mit einem solchen elektrolytischen Reaktionssystem ein gutes Verhältnis zwischen zugeführter elektrischer Energie und erhaltener chemischer Energie erzielbar ist. Dies wird vor allem durch die bauliche Kombination und die technische Wechselwirkung zwischen der Elektrodenanordnung und den durch die Elektroden der Elektrodenanordnung definierten Strömungskanälen erzielt, welche sich in Bezug auf die Strömungsrichtung des Elektrolyten an wenigstens einer Stelle verjüngen bzw. schmäler werden. Durch die einander überlagerten Schwingungen des in den Strömungskanälen beschleunigten Elektrolyten bzw. durch die kombinierten Wirkungen aus den elektrischen Feldern der Elektrodenanordnung, sind optimale Vorrausetzungen geschaffen, um Wasserstoff bzw. Sauerstoff oder ein entsprechendes Gemisch unter einem guten Wirkungsrad zu erzeugen.

Eine überraschende, vorteilhafte Wechselwirkung liegt unter anderem darin, dass die während des Elektrolyseprozesses entstehenden Gasblasen, insbesondere die jeweiligen Wasserstoff- und Sauerstoffblasen, verbessert bzw. beschleunigt von den Elektrodenflächen abgelöst werden. Zudem werden kürzere Ausgasungszeiten der jeweiligen Gase aus dem Elektrolyten erzielt. Damit einhergehend ergibt sich, dass die zur Verfügung stehenden Elektroden bzw. deren wirksamen Flächen jeweils maximal für den Umwandlungsprozess zur Verfügung stehen und stets eine möglichst intensive Kontaktierung mit dem Elektrolyten vorliegt. Insbesondere werden Gasgrenzschichten zwischen den Elektroden und dem Elektrolyten möglichst klein gehalten bzw. möglichst rasch abgebaut.

Ein besonders nützlicher Wechselwirkungseffekt liegt darin, dass die Gasblasen, welche entlang der Strömungsrichtung in zunehmend größerer Anzahl bzw. Dichte auftreten, insbesondere nach oben hin immer mehr werden bzw. stärker kumuliert im Elektrolyten vorliegen, vergleichsweise schneller bzw. intensiver von den Oberflächen der Elektroden entfernt werden, weil sie mit zunehmend höherer Strömungsgeschwindigkeit aus dem zumindest einen Spalt bzw. Strömungskanal zwischen zueinander benachbarten Elektrodenoberflächen abgeführt werden. Dieser Effekt wird durch den zumindest einen anspruchsgemäß ausgebildeten Strömungskanal, insbesondere durch die Form und/oder Ausrichtung der Elektroden erreicht. In weiterer Folge wird durch die intensive Ablösung bzw. durch die zunehmend beschleunigte Entfernung von entstehenden Wasserstoff- bzw. Sauerstoff-Gasblasen erreicht, dass die Stromdichte in der Elektrodenanordnung bzw. im Elektrolyten einheitlicher bzw. gleichmäßiger wird und dadurch ein wirkungsvoller Elektrolysevorgang bzw. eine hohe Performance des Reaktionssystems erreicht werden kann. Die in Richtung zum Austrittsbereich zunehmende Strömungsgeschwindigkeit des Elektrolyten innerhalb des zumindest einen sich verjüngenden Strömungskanals hat also positive Auswirkungen auf die Ablösungsintensität der Gasblasen, auf die Abförderungs-Geschwindigkeit der Gasblasen, und auf die erzielbare Stromdichte in der Elektrodenanordnung bzw. im Elektrolyten.

Insbesondere wird die Abführung des im Elektrolyten befindlichen Gasanteils unterstützt bzw. beschleunigt, sodass die Effektivität bzw. Wirksamkeit des Elektrolysevorganges stets möglichst hoch gehalten ist. Insgesamt wird dadurch ein verbessertes, elektrolytisches Reaktionssystem geschaffen, welches innerhalb relativ kurzer Prozesszeiten relativ hohe Mengen an elektrolytisch gewonnenem, gasförmigen Wasserstoff und Sauerstoff bereitstellt. Hinzu kommt, dass das erfindungsgemäße Elektrolysesystem relativ kostengünstig aufgebaut werden kann und somit eine hohe Wirtschaftlichkeit besitzt bzw. eine praxistaugliche Nutzung ermöglicht.

Die nachfolgenden und auch die vorhergehenden Effekt- bzw. Wirkungsangaben sind als exemplarische Angaben zu verstehen und erheben keinerlei Anspruch auf Vollständigkeit. Ferner müssen nicht alle der jeweils genannten Effekte eintreten. Außerdem unterliegen die genannten Effekt- bzw. Wirkungsangaben keinerlei Gewichtung und sind die Erläuterungen der diversen Zusammenhänge teilweise als am ehesten wahrscheinlich anzusehen. Zum Teil liegen nicht bzw. kaum erklärbare Phänomene bzw. Wechselwirkungen vor, deren technische Hintergründe für die allgemeine Fachwelt nicht offensichtlich bzw. schwer erklärbar sind. Die entsprechenden Resultate basieren teilweise auf zahlreichen Versuchsreihen und auf empirischen Veränderungen von Parametern des elektrolytischen Systems.

Durch die Ausgestaltung nach Anspruch 2 kann der sich verjüngende Strömungskanal mechanisch robust aufgebaut werden. Darüber hinaus ist dadurch eine möglichst einfache Installation erzielbar bzw. ein möglichst einfacher Aufbau des elektrolytischen Reaktionssystems geschaffen, wodurch dessen Gestehungskosten relativ gering gehalten werden können.

Vorteilhaft ist auch eine mögliche Ausführungsform gemäß Anspruch 3. Dadurch sind ausgeprägte Verjüngungen in dem zumindest einen Strömungskanal erzielbar. Ausreichend kann es sein, wenn lediglich die innere oder die äußere Mantelflächen gegenüber der Zentralachse bzw. gegenüber der Zylinder- bzw. Vertikalachse der Elektrodenanordnung geneigt ist. Wenn sowohl die radial innere, als auch die radial äußere Begrenzungsfläche des Strömungskanals in einem Winkel zur Zylinder- bzw. Vertikalachse verlaufen bzw. winkelig zu einer Vertikalen ausgerichtet sind, kann eine düsenartige Zuspitzung des Strömungskanals relativ intensiv ausgeführt werden. In diesem Fall verlaufen sowohl die anodische, als auch die kathodische Begrenzungsfläche des Strömungskanals in einem Winkel zur Zylinder- bzw. Vertikalachse. Zudem kann dadurch bei relativ geringer Neigung der Mantelflächen der Elektroden ein sich relativ stark verjüngender Strömungskanal geschaffen werden. Dies begünstigt die Ablösung sowohl von Wasserstoff-Bläschen als auch von Sauerstoff-Bläschen von den kathodischen bzw. anodischen Wirkflächen der Elektroden.

Zweckmäßig ist auch eine Ausgestaltung nach Anspruch 4. Dadurch kann eine möglichst kostengünstige Fertigung der Elektrodenanordnung und in weiterer Folge des Elektrolysesystems begünstigt werden, ohne dass dadurch nennenswerte Einbußen an Leistungsfähigkeit verursacht werden.

Durch eine vorteilhafte Weiterbildung gemäß Anspruch 5 kann eine strömungstechnisch günstige und leistungsoptimierte Elektrodenanordnung aufgebaut werden. Zudem ist eine möglichst kostengünstige Fertigung erzielbar, insbesondere wenn Fertigungsverfahren wie Gießen und/oder Drehen genutzt werden.

Vorteilhaft ist auch eine Maßnahme gemäß welcher der wenigstens eine sich verjüngende Strömungskanal durch geneigt zueinander verlaufende Längsachsen von zumindest zwei unmittelbar benachbarten Elektroden gebildet ist. Ein entlang der Strömungsrichtung sich verjüngender bzw. enger werdender Strömungskanal für den Elektrolyten kann in einfacher, aber dennoch wirkungsvoller, Art und Weise auch durch eine definierte Winkelstellung bzw. Ausrichtung zwischen unmittelbar benachbarten Elektroden bzw. Elektrodenoberflächen vorteilhaft realisiert sein.

Entsprechend der vorteilhaften Maßnahme nach Anspruch 6 ist vorgesehen, dass in axialer Richtung der virtuellen Zylinder- bzw. Vertikalachse oberhalb und/oder unterhalb der Elektrodenanordnung wenigstens eine elektromagnetische Spule angeordnet ist, deren elektromagnetisches Feld bei Beaufschlagung mit elektrischer Energie auf den Elektrolyten und auf die Elektrodenanordnung einwirkt. Dadurch wird die Stromdichte erhöht und damit die Effizienz des Elektrolyseprozesses begünstigt. Darüber hinaus können dadurch minimale Schwingungen bzw. Vibrationen der Elektroden und des Elektrolyten erzeugt werden, welche den Elektrolyseprozess unter anderem aufgrund einer intensiveren Ablösung von Gasblasen an den Elektroden und/oder aufgrund einer intensiveren Entgasung des Elektrolyten unterstützen können.

Ferner kann vorsehen sein, dass die zumindest eine Reaktionskammer eine im Wesentlichen hohlzylindrische oder hohlprismatische Körperform aufweist und ihre virtuelle Zentralachse, insbesondere eine Mantelfläche der Reaktionskammer, vertikal oder annähernd vertikal ausgerichtet ist. Dadurch ist eine strömungstechnisch günstige Körperform und Ausrichtung geschaffen, um definierte bzw. gerichtete Strömungen im Elektrolyten und in den Raumabschnitten für die sich ansammelnden Gase zu erzielen. Außerdem sind dadurch relativ kompakt aufbauende, elektrolytische Reaktionssysteme mit relativ hoher Leistungsfähigkeit erzielbar.

Entsprechend einer Weiterbildung, wie sie in Anspruch 7 angegeben ist, kann vorgesehen sein, dass die Reaktionskammer einen im Wesentlichen hohlzylindrischen oder hohlprismatischen Aufnahmebehälter umfasst, in welchem die wenigstens rohrförmige, oder alternativ sternförmige, Elektrodenanordnung angeordnet ist. Dadurch liegt eine Art Behälter-in-Behälter-Anordnung vor, welche die Leistungsfähigkeit des Elektrolyseprozesses ebenso begünstigt. Insbesondere wird dadurch eine Aufteilung in einen Behälter für die Elektrolyt- und Elektrodenaufnahme und in eine diesen Behälter umgebende Behälter- bzw. Kammeranordnung für die Aufnahme der genannten Komponenten sowie für die Kumulierung der entstehenden Gase geschaffen.

Außerdem kann eine Ausgestaltung gemäß Anspruch 8 vorgesehen sein, bei welcher der Aufnahmebehälter für den Elektrolyten und für die wenigstens eine Elektrodenanordnung im oberen Endabschnitt offen ausgeführt ist und dessen Mantel- oder Zylinderfläche von den inneren Wandflächen der Reaktionskammer beabstandet angeordnet ist. Dadurch liegt ein möglichst großer Ausgasungsquerschnitt vor, welcher zu einer möglichst kurzen Ausgasungszeit und zu einer möglichst intensiven Ausgasung beiträgt. Darüber hinaus ist ein Aufnahmebehälter für den Elektrolyten geschaffen, welcher einen ungehinderten bzw. großzügigen Überlauf für die Elektrolytflüssigkeit und/oder für den gegebenenfalls entstehenden Elektrolytschaum bietet. Ein solcher Elektrolytschaum bildet sich in der Regel auf der Elektrolytflüssigkeit, insbesondere an der Oberfläche des Elektrolytbades aus und behindert zum Teil die Ausgasung der Gasanteile im Elektrolyten. Durch einen kontinuierlichen Abbau bzw. eine Vermeidung einer Schaumkrone am Elektrolytbad, was insbesondere durch eine einfache Ableitung derselben erzielbar ist, kann die Effizienz des Systems möglichst hoch gehalten werden.

Darüber hinaus ist es durch die anspruchsgemäßen Maßnahmen in vorteilhafter Art und Weise relativ einfach möglich, einen definierten Elektrolytkreislauf zu schaffen. Insbesondere kann Elektrolytflüssigkeit gegenüber dem Aufnahmebehälter kontinuierlich oder diskontinuierlich zu- und abgeführt werden, wobei die Übermenge an Elektrolytflüssigkeit über den oberen Rand des Aufnahmebehälters wasserfallartig wieder abfließen kann und gegebenenfalls nach einem Reinigungs- und/oder Kühl- und/oder Aufbereitungsprozess dem Aufnahme- bzw. Elektrolytbehälter wieder zugeführt werden kann. Es kann also dadurch in einfacher Art und Weise eine Umwälzung der Elektrolytflüssigkeit erfolgen, wodurch unter anderem eine intensive und rasche Ausgasung erzielt wird. Insbesondere ist dadurch ein Reaktions- bzw. Aufnahmebehälter geschaffen, bei welchem die durch den elektrolytischen Prozess hervorgerufene Expansion bzw. Volumensvergrößerung des Elektrolyten via die Überlaufkante des Aufnahmebehälters einfach ausgeglichen bzw. reguliert werden kann. Alternativ oder in Kombination dazu kann die durch eine kontinuierliche oder diskontinuierliche Elektrolytzufuhr in den Aufnahmebehälter entstehende Überschussmenge an Elektrolytflüssigkeit definiert aus dem Elektrolytbehälter wieder abfließen und entsprechend einer vorteilhaften Ausführungsvariante dem Aufnahmebehälter erneut zugeführt werden. Weiters entsteht dadurch eine Art "Elektrolytgefälle" über die Außen- und/oder über Innenwände des Aufnahmebehälters. Dieser Elektrolytabfluss bzw. Elektrolytabfall kann dabei an Außenflächen des Aufnahmebehälters und/oder an zentralen, inneren Wandabschnitten des Aufnahmebehälters erfolgen, indem der Aufnahmebehälter für den Elektrolyten eine hohlzylindrische oder mehrfach hohlzylindrische Körperform besitzt, insbesondere kaskadisch ausgebildet ist bzw. koaxial ineinander gestellte Aufnahmebehälter aufweist.

Auch durch die Maßnahmen gemäß welchen eine virtuelle Rohrachse der rohrartigen Elektrodenanordnung im Wesentlichen auf der virtuellen Zylinder- bzw. Vertikalachse oder deckungsgleich zur virtuellen Zylinder- bzw. Vertikalachse der Reaktionskammer liegt, wird eine strömungstechnisch günstige Ausführung geschaffen, welche die Effizienz bzw. die Reaktionszeit des elektrolytischen Reaktionssystems verbessert.

Von besonderem Vorteil sind auch die Maßnahmen gemäß Anspruch 9 und/oder 10, da dadurch eine besonders gute Elektrolysewirkung erzielt bzw. eine möglichst intensive technische Wechselwirkung aufgebaut wird. Insbesondere kann das elektromagnetische Feld der wenigstens einen elektromagnetische Spule besonders intensiv auf die Elektrodenanordnung und auf den Elektrolyten einwirken und dadurch den Fortschritt bzw. die Effizienz im elektrolytischen Prozess verbessern. Einerseits wirkt also das elektromagnetische Feld der wenigstens einen elektromagnetischen Spule günstig auf den Zerlegungsprozess ein. Darüber hinaus werden auch die in der wenigstens einen elektromagnetischen Spule entstehenden, mechanischen Schwingungen möglichst direkt auf den Elektrolyten bzw. auf die Elektrodenanordnung eingeleitet. Dadurch wird der Ablösungsprozess der Gasbläschen von den Elektroden bzw. der Ausgasungsvorgang aus dem Elektrolyten verbessert bzw. beschleunigt. Die genannten Effekte gehen mit einer Verbesserung, insbesondere mit einer Effizienz- und Leistungssteigerung des elektrolytischen Reaktionssystems einher.

Von Vorteil ist ferner eine Weiterbildung nach Anspruch 11, da eine derartige elektromagnetische Spule ein elektromagnetisches Feld aufbaut, welches günstig auf den elektrolytischen Prozess einwirkt, insbesondere dessen Effizienz steigert. Insbesondere wird dadurch eine relativ innige und relativ gleichmäßige Beaufschlagung der Elektrodenanordnung mit dem elektromagnetischen Feld dieser Spule, welche ein pulsierendes Feld erzeugt bzw. ein Wechselfeld generiert, erzielt. Das elektromagnetische Feld zirkuliert dabei um die Vertikal- bzw. Zentralachse der Elektrodenanordnung bzw. der Reaktionskammer, welche Achse zudem durch den Kern bzw. das Zentrum der im Wesentlichen ringförmig ausgebildeten Spule verläuft.

Die Ausgestaltung gemäß welcher die elektromagnetische Spule torusförmig ausgebildet ist und wenigstens eine Spulenwicklung, bevorzugt zumindest zwei, insbesondere vier um den Kreisumfang eines Wicklungskörpers verteilt angeordnete, jeweils zueinander beabstandet gewickelte Teilwicklungen aufweist, ist eine vorteilhafte bzw. besonders wirksame Ausführungsform der elektromagnetischen Spule. Damit kann die Wirksamkeit bzw. Gesamtleistung des elektrolytischen Reaktionssystems günstig beeinflusst werden.

Von besonderem Vorteil ist auch eine Ausgestaltung nach Anspruch 12, da dadurch der Ablösungs- bzw. Ausgasungsprozess in der Elektrolytflüssigkeit verbessert bzw. beschleunigt wird. Insbesondere kann dadurch eine Umwälzung aufgebaut bzw. eine Strömung generiert werden, durch welche die Gasblasen von den Elektrodenflächen besser, insbesondere relativ gründlich und schnell abgelöst werden. Außerdem wird der Ausgasungsprozess bezüglich der in der Elektrolytflüssigkeit befindlichen Gasblasen in einen oberhalb der Elektrolytflüssigkeit befindlichen Gasraum unterstützt. Die Zuführung und/oder Nachfüllung des Elektrolyten im unteren Abschnitt der Reaktionskammer bzw. des Aufnahmebehälters erfolgt dabei periodisch, aperiodisch und/oder bedarfsgesteuert. Wesentlich ist, dass durch diese Zuführung und/oder Nachfüllung eine Verwirbelung bzw. Strömung im Elektrolyten aufgebaut wird.

Die vorhergehend genannten, vorteilhaften Effekte bzw. technischen Wirkungen werden unabhängig oder in Kombination dazu auch durch die Maßnahmen gemäß Anspruch 13 erzielt. Das Mittel zur Verwirbelung des Elektrolyten bzw. zum Aufbau einer Strömung im Elektrolyten kann dabei durch den Elektrolyten selbst und/oder durch Beifügung von gasförmigen Medien, beispielsweise Luft oder Stickstoff, erreicht werden. In vorteilhafter Art und Weise kann bei einer Zuführung von sonstigen, nicht brennbaren Gasen, wie z.B. Umgebungsluft oder Stickstoff, der Brennwert des elektrolytisch erzeugten Wasserstoffgases reguliert, insbesondere gesenkt werden. Durch diese Zumischung von nichtbrennbaren Gasen direkt in den Elektrolyten wird also einerseits eine Verwirbelung bzw. Strömung im Elektrolytbad erzeugt und andererseits der Brennwert bzw. die Verbrennungsgeschwindigkeit des elektrolytisch erzeugten Wasserstoffgases gesenkt. Dadurch kann die Energiemenge bzw. die Explosivität, insbesondere die Verbrennungsgeschwindigkeit des elektrolytisch erzeugten Gases bzw. Gasgemisches auf ein Niveau gesenkt werden, um relativ problemlos und einfach in nahezu standardmäßigen Verbrennungskraftmaschinen verwertet werden zu können. Zudem können optimale Mischungen von Gasen für nachfolgende Verwendungen vorbereitet werden.

Von Vorteil ist auch eine Weiterbildung nach Anspruch 14, da dadurch eine Art Sprüh- bzw. Diffusoreffekt erzielt wird, welcher eine möglichst gleichmäßige bzw. innige Strömungsverteilung im Elektrolyten bewirkt. Insbesondere wird dadurch eine möglichst vollständige bzw. gleichmäßige Ausgasung in Bezug auf die im Elektrolyten befindlichen Gasblasen bzw. in Bezug auf die an den Elektrodenflächen haftenden Gasblasen bewirkt. Darüber hinaus wird dadurch die Fremdgasdichte, insbesondere der Mengenanteil von in den Elektrolyt eingeblasenen bzw. eingebrachten Gasen pro definiertem Elektrolytvolumen, gering gehalten bzw. homogenisiert und dadurch die Elektrolyseleistung hoch gehalten.

Eine andere Ausführungsform zur Verkürzung der Ausgasungszeiten aus der Flüssigkeit und zur Intensivierung des Kontaktes zwischen dem Elektrolyten und den Elektrodenplatten wird dadurch erzielt, dass die zumindest eine Ansaug- und/oder Auslassdüse im Nahbereich zur inneren Mantelfläche der Reaktionskammer oder des Aufnahmebehälters angeordnet und in einem Winkel zur inneren Mantelfläche ausgerichtet ist, sodass im Elektrolyten eine turbulent wirbelnde Strömung erzeugbar ist. Insbesondere kann dadurch mit relativ geringem technischen Aufwand und auch mit möglichst geringen Kosten eine turbulente Strömung, insbesondere eine wirbelnde bzw. schraubenförmig nach oben verlaufende Strömung des Elektrolyten bewirkt werden.

Aber auch durch die Maßnahmen gemäß Anspruch 15 wird der Ausgasungseffekt bzw. die Ausgasungsleistung des elektrolytischen Reaktionssystems verbessert. Insbesondere dann, wenn die Elektrolytflüssigkeit kontinuierlich oder diskontinuierlich über die Überlaufkante fließt, wird eine Art von Elektrolytgefälle bzw. "Wasserfall" geschaffen, durch welchen eine intensive bzw. leistungsfähige Ausgasungsmaßnahme geschaffen ist, wie dies auch vorhergehend bereits erläutert wurde. Ein entsprechender Überlauf bzw. Übertritt des Elektrolyten kann dabei durch eine erzwungene Zuführung bzw. Nachfüllung von Elektrolytflüssigkeit bewerkstelligt werden und/oder durch die Volumensexpansion der Elektrolytflüssigkeit während des Elektrolyseprozesses verursacht bzw. eingeleitet oder mitbestimmt werden.

Eine baulich bzw. konstruktiv einfache Überlaufkante ist dadurch geschaffen, dass die zumindest eine Überlaufkante für den Elektrolyten durch eine obere Begrenzungskante eines Aufnahmebehälters, insbesondere eines hohlzylindrischen Elektrolytbehälters mit vertikal ausgerichteter Zylinderachse gebildet ist. Darüber hinaus wird dadurch ein relativ homogener bzw. gleichförmiger Elektrolytüberlauf geschaffen, sodass eine möglichst intensive Ausgasung bzw. Trennung zwischen der Elektrolytflüssigkeit und der in der Elektrolytflüssigkeit enthaltenen Gase bzw. Gasblasen erzielt wird. Dies wird unter anderem durch die relativ großflächige Ausbreitung der Elektrolytflüssigkeit ermöglicht.

Von Vorteil ist aber auch eine Ausgestaltung nach Anspruch 16, da dadurch stets eine intensive Ausgasung bzw. ein ausreichend großer Gasraum zur Verfügung steht. Ferner kann eine Entstehung von Überdruck in der Reaktionskammer bzw. eine Überschreitung eines definierten Druckwertes vermieden werden. Insbesondere wird dadurch ein bestimmtes Druckniveau innerhalb der Reaktionskammer eingehalten, nachdem die elektrolysebedingte Expansion der Elektrolytflüssigkeit durch eine definierte Ableitung von Elektrolyseflüssigkeit ausgeglichen oder zumindest annähernd kompensiert wird. Insbesondere bleibt dadurch innerhalb der Reaktionskammer ein definiertes Ausgasungsvolumen erhalten bzw. wird ein definierter Gasdruck im Gasraum der Reaktionskammer nicht überschritten.

Von Vorteil ist auch eine Ausgestaltung nach Anspruch 17, da dadurch Gasanteile, welche im überströmenden bzw. abgeleiteten Elektrolyt enthalten sind, im System erhalten bleiben und somit quasi nicht verloren gehen. Außerdem wird durch die Rückführung des Elektrolyten eine Verwirbelung bzw. Strömung im Elektrolytbehälter aufgebaut, durch welche die Ausströmung bzw. Absonderung der Gasanteile aus dem flüssigen Elektrolyten verbessert bzw. beschleunigt wird.

Durch die Maßnahmen gemäß Anspruch 18 wird auf einfache, aber zuverlässige Art und Weise verhindert, dass Wasserstoffgas, welches sich vor allem im oberen Abschnitt der Reaktionskammer ansammelt, über den Elektrolytabfluss abgesaugt oder abgeleitet wird. Insbesondere ist dadurch verhindert, dass das elektrolytisch gewonnene Wasserstoffgas via den Ab- bzw. Zufluss für die elektrolytische Flüssigkeit abgeführt bzw. in einen Kühlkreislauf für den Elektrolyten gelangt. Das elektrolytisch generierte Wasserstoffgas bzw. Wasserstoff-Sauerstoff-Gemisch steht somit vor allem für den jeweiligen Verbraucher bzw. Abnehmer des Wasserstoff- bzw. Sauerstoffgases zur Verfügung. Damit wird auch erhöhten Sicherheitsanforderungen Rechnung getragen, nachdem eine Ableitung von Wasserstoffgas in andere Kanäle bzw. andere Bereiche als in den dafür vorgesehenen Gasauslassbereich, technisch einfach aber effektiv unterbunden bzw. minimiert wird.

Von besonderem Vorteil sind außerdem die Maßnahmen gekennzeichnet durch einen kontinuierlichen oder diskontinuierlichen Zufluss und Abfluss des Elektrolyten, insbesondere durch einen zeitbezogenen, allmählichen Austausch des Wasser umfassenden oder durch Wasser gebildeten Elektrolyten in der Reaktionskammer bzw. in einem den Elektrolyten aufnehmenden Aufnahmebehälter. Dadurch wird eine Umwälzung in der Elektrolytflüssigkeit erzielt, welche einen Ausgasungsprozess beschleunigt bzw. verbessert. Ein weiterer, wesentlicher Vorteil liegt darin, dass damit eine einfache Regulierung der Elektrolytflüssigkeit einhergeht. Insbesondere kann dadurch in einfacher Art und Weise eine Kühlung bzw. Temperaturbegrenzung für die Elektrolytflüssigkeit erzielt werden. Der entsprechende Kühlprozess ist dabei durch relativ geringe Zufuhr an Energie zu bewerkstelligen, da die üblichen Umgebungstemperaturen in der Regel ausreichen, um die Elektrolytflüssigkeit auf einem für den Elektrolyseprozess günstigen Temperaturniveau bzw. in einem zufriedenstellenden Temperaturbereich zu halten. Ein vorteilhafter Temperaturbereich liegt vor, wenn die Elektrolytflüssigkeit in einem Temperaturbereich unter 60°C, bevorzugt in einem Temperaturbereich zwischen 20°C bis 50°C, insbesondere zwischen 28°C bis 43°C gehalten wird.

Entsprechend einer Weiterbildung kann vorgesehen sein, dass im Boden- oder Mantelabschnitt der Reaktionskammer, insbesondere eines Aufnahmebehälters für den Elektrolyten, zumindest eine Durchtrittsöffnung, insbesondere eine Mehrzahl von verteilt angeordneten Durchtrittsöffnungen für in die Reaktionskammer, insbesondere in einen Aufnahmebehälter für den Elektrolyten einzuleitende Umgebungsluft und/oder für in den Elektrolyten einzublasenden, gasförmigen Stickstoff ausgebildet sind. Zum einen wird dadurch eine Kühlung und/oder Aufwirbelung der Elektrolytflüssigkeit erzielt und damit einhergehend die Ausgasungsgeschwindigkeit bzw. die Ausgasungseffizienz in Bezug auf elektrolytisch generierte Gasanteile in der Elektrolytflüssigkeit gesteigert. Zum anderen wird aber auch eine einfache Regulierung des Brenn- bzw. Energiewertes des Gasgemisches im elektrolytischen Reaktionssystem erzielt. Insbesondere kann durch entsprechende Regulierung der zugeführten Menge an Umgebungsluft bzw. gasförmigem Stickstoff dessen Energiemenge bzw. Brennwert, insbesondere dessen Verbrennungsgeschwindigkeit derart eingestellt werden, dass eine problemlose Verbrennung in standardmäßigen Verbrauchern, wie z.B. in Verbrennungskraftmaschinen oder Heizungsvorrichtungen, ermöglicht ist. Die zugeführten Gase erzielen somit einen doppelten Effekt bzw. eine Mehrfachwirkung, wobei die Summeneffekte ein überraschend hohes positives Ausmaß aufweisen.

Eine weitere vorteilhafte Ausführung ist in Anspruch 19 angegeben. Dadurch wird ein Mehrfachnutzen erzielt bzw. eine vorteilhafte Anwendung geschaffen. Insbesondere wird dadurch der Unterdruck, welcher von einem Verbraucher oder von dessen Aggregat, wie z.B. einer Unterdruckpumpe oder einer Aufladungsvorrichtung für den Verbrennungsraum (z.B. einem Turbolader), aufgebaut wird, auch dazu genutzt, um die Ausgasung bzw. Gasablösung im elektrolytischen Reaktionssystem zu unterstützen bzw. zu beschleunigen. Der jeweilige Unterdruck, welcher vom jeweiligen Verbraucher bzw. von dessen Brennstoffzuführung aufgebaut wird, kann dabei durch beliebige aus dem Stand der Technik bekannte Regulierungsmaßnahmen in einem bestimmten, als optimal angesehenen Bereich gehalten werden.

Von Vorteil sind auch die Maßnahmen gemäß welchen die wenigstens eine elektromagnetische Spule im Wesentlichen torus- oder ringförmig ausgebildet ist und eine Mehrzahl von elektrisch in Serie geschalteten Teilwicklungen umfasst, welche sich j eweils über einen Umfangswinkel zwischen 20° bis 50°, insbesondere zwischen 25° bis 45°, bevorzugt in etwa über 30° des Ringumfanges der Spule erstrecken. Dadurch werden Zonen definiert, in welchen ein vergleichsweise starkes bzw. intensives elektromagnetisches Feld vorliegt und werden weiters Zonen geschaffen, in welchen die Intensität dieses Feldes vergleichsweise geringer ist. Diese inhomogenen, d.h. in Bezug auf den Ringumfang zu- und abnehmenden Feldstärken wirken sich entsprechend positiv auf die Wirksamkeit bzw. auf die Gesamtleistung des elektrolytischen Reaktionssystems aus.

Ferner können die technischen Maßnahmen gemäß Anspruch 20 vorgesehen sein. Vorteilhaft ist dabei, dass dadurch die Elektrodenanordnung bzw. deren Elektroden die Eigenschaften eines magnetischen Kerns, insbesondere eines Metallkerns, für die hohlzylindrische Spule aufweist bzw. erfüllt. Der durch die Aufnahmekammer bzw. die innere Reaktionskammer fließende magnetische Fluss unterliegt dabei einer zeitlichen Änderung und führt somit zu einer elektromagnetischen Induktion an bzw. in den Elektroden. Nachdem die einzelnen Elektroden an radial unterschiedlichen Durchmesserpositionen angeordnet sind, werden unterschiedliche elektrische Potentiale aufgebaut, welche den Elektrolyseprozess unterstützen können.

Zweckmäßig ist auch eine Ausgestaltung gemäß welcher eine axiale Länge der hohlzylindrischen, elektromagnetischen Spule zumindest annähernd einer vertikalen Länge der Elektrodenanordnung entspricht, da dadurch eine möglichst intensive elektromagnetische Wechselwirkung zwischen der Elektrodenanordnung und der hohlzylindrischen, die Elektrodenanordnung außen umschließenden Spule aufgebaut werden kann.

Eine vorteilhafte Weiterbildung ist auch in Anspruch 21 angegeben. Dadurch wird eine möglichst intensive Ausgasung des Elektrolyten bewerkstelligt, welche Entgasungsvorrichtung insbesondere im Anschluss an die Durchströmung der Elektrodenanordnung vorteilhaft positioniert ist. Die Wirksamkeit bzw. die Leistungsfähigkeit des elektrolytischen Reaktionssystems kann dadurch zusätzlich gesteigert werden.

Eine vorteilhafte Ausprägung der Entgasungsvorrichtung ist in Anspruch 22 angegeben. Dadurch kann in einfacher und trotzdem wirksamer Art und Weise ein relativ dünner Flüssigkeitsfilm bzw. eine flächig verteilte Elektrolytschicht aufgebaut werden, wodurch die Absonderung der Gasbläschen aus dem Elektrolyten begünstigt wird. Die entsprechende Entgasungsvorrichtung kann dabei konstruktiv einfach und somit kostengünstig implementiert werden. Darüber hinaus ist keine gesonderte Energiezufuhr erforderlich, um diese Entgasungsvorrichtung betreiben zu können, weil der Elektrolyt durch Schwerkraftwirkung nach unten abließen kann.

Gemäß einer Weiterbildung nach Anspruch 23 ist es möglich, den kompletten Umfangsabschnitt des Aufnahme- bzw. Elektrolytbehälters auszunutzen und so eine möglichst intensive Entgasung des Elektrolyten zu bewerkstelligen.

Durch die weiterführenden Maßnahmen gemäß Anspruch 24 können eine Mehrzahl von zu- und abnehmenden Gefälleabschnitten für den Elektrolyten geschaffen werden, welche eine Durchmischung des Elektrolyten bewirken und so die Entgasungswirkung der Entgasungsvorrichtung zusätzlich verbessern können.

Zum besseren Verständnis der Erfindung wird diese anhand der nachfolgenden Figuren näher erläutert. Die in den Figuren 1-10 gezeigten Ausführungsformen stellen nicht erfindungsgemäße Ausgestaltungen dar.

Es zeigen jeweils in stark vereinfachter, schematischer Darstellung:
- Fig. 1: ein prinzipielles Schaubild einer Ausführungsform des elektrolytischen Reaktionssystems, welches eine Mehrzahl von technischen Ausführungs- bzw. Weiterbildungsmöglichkeiten veranschaulicht;
- Fig. 2: eine perspektivische Ansicht einer ersten Ausführungsform des elektrolytischen Reaktionssystems;
- Fig. 3: eine Veranschaulichung einer Elektrodenanordnung mit sternförmig aufgefächerten, plattenförmigen Elektroden in Draufsicht;
- Fig. 4: eine weitere Ausführungsform einer sternförmigen Elektrodenanordnung umfassend im Querschnitt keilförmig oder sektorartig ausgebildete, plattenförmige Elektroden in Draufsicht;
- Fig. 5: eine Ausführungsform einer elektromagnetischen Spule, wie sie im elektrolytischen Reaktionssystem zum Einsatz kommt;
- Fig. 6: eine weitere Ausführungsform eines elektrolytischen Reaktionssystems im Längsschnitt;
- Fig. 7: das elektrolytische Reaktionssystem gemäß Fig. 6, geschnitten gemäß den Linien VII - VII in Fig. 6;
- Fig. 8: eine weitere Ausführungsform einer Elektrodenanordnung innerhalb eines elektrolytischen Reaktionssystems in Draufsicht;
- Fig. 9: eine weitere Ausführungsform einer elektromagnetischen Spule, wie sie im elektrolytischen Reaktionssystem zum Einsatz kommen kann;
- Fig. 10: eine weitere Ausführungsform des elektrolytischen Reaktionssystems;
- Fig. 11: eine Elektrodenanordnung im vereinfachten Vertikalschnitt, welche rohrförmig ausgebildete Elektroden mit winkelig bzw. geneigt zueinander ausgerichteten Elektrodenflächen aufweist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7 oder 3,2 bis 8,1 oder 5,5 bis 10.

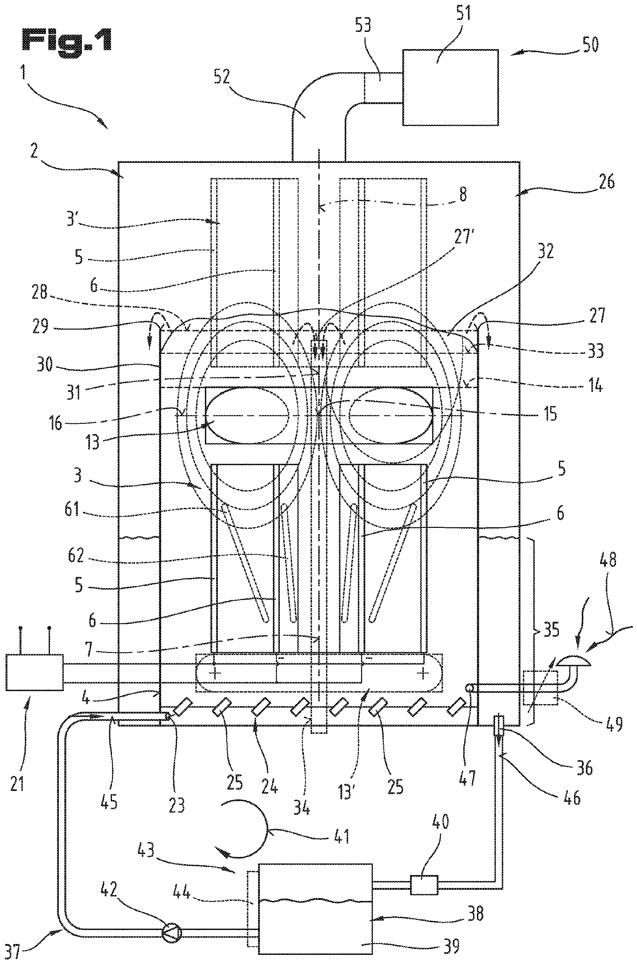

In Fig. 1 ist ein schematisches Schaubild einer Ausführungsform des elektrolytischen Reaktionssystems 1 hinsichtlich seines prinzipiellen, technischen Aufbaus veranschaulicht. Es wird ausdrücklich festgehalten, dass nicht alle der darin veranschaulichten Maßnahmen zum Erfindungsgegenstand zählen. Selbstverständlich sind einzelne der in Fig. 1 dargestellten Ausbildungs- bzw. Verfahrensmaßnahmen auch auf die nachfolgend erläuterten Ausführungsbeispiele übertragbar.

Das angegebene elektrolytische Reaktionssystem 1 dient zur Erzeugung von gasförmigem Wasserstoff und Sauerstoff durch Anwendung des Elektrolyseverfahrens. Insbesondere wird mittels dem elektrolytischen Reaktionssystem 1 während dessen Betrieb ein Elektrolyt, insbesondere Wasser, oder ein wässriger Elektrolyt, insbesondere eine Mischung aus Wasser und einem dessen Leitfähigkeit erhöhenden Zusatz, wie beispielesweise Schwefelsäure, durch einen elektrolytischen Prozess in gasförmigen Wasserstoff und gasförmigen Sauerstoff aufgespalten bzw. in ein entsprechendes Gasgemisch umgeformt.

Wie an sich bekannt, umfasst ein solches elektrolytisches Reaktionssystem 1 wenigstens eine Reaktionskammer 2 zur Aufnahme bzw. Bevorratung eines wässrigen bzw. auf Wasser basierenden Elektrolyten, sowie wenigstens eine Elektrodenanordnung 3, welche aus einer Mehrzahl von anodischen und kathodischen Elektroden gebildet ist.

Die Reaktionskammer 2 ist bevorzugt durch einen im Wesentlichen hohlzylindrischen Aufnahmebehälter 4 gebildet, in welchem wenigstens eine Elektrodenanordnung 3 angeordnet ist. Entsprechend einer ersten Ausführungsform ist diese Elektrodenanordnung 3 durch eine Mehrzahl von sternförmig aufgefächerten, plattenförmigen Elektroden 5, 6 gebildet. Einander benachbarte Elektrodenplatten 5, 6 bilden dabei abwechselnd eine Kathode und Anode aus. Die aufeinander folgende, wechselweise Polung der einzelnen Elektroden 5, 6 zur Bildung aufeinanderfolgender Kathoden und Anoden ist bei elektrolytischen Systemen bekannt. Anstelle der sternförmig aufgefächerten, plattenförmigen Elektroden 5, 6 ist es entsprechend einer weiteren Ausführungsform auch möglich, hohlkörperartige, insbesondere prismatische Elektroden bzw. rohrförmige Elektroden einzusetzen, wie dies nachfolgend beschrieben wird.

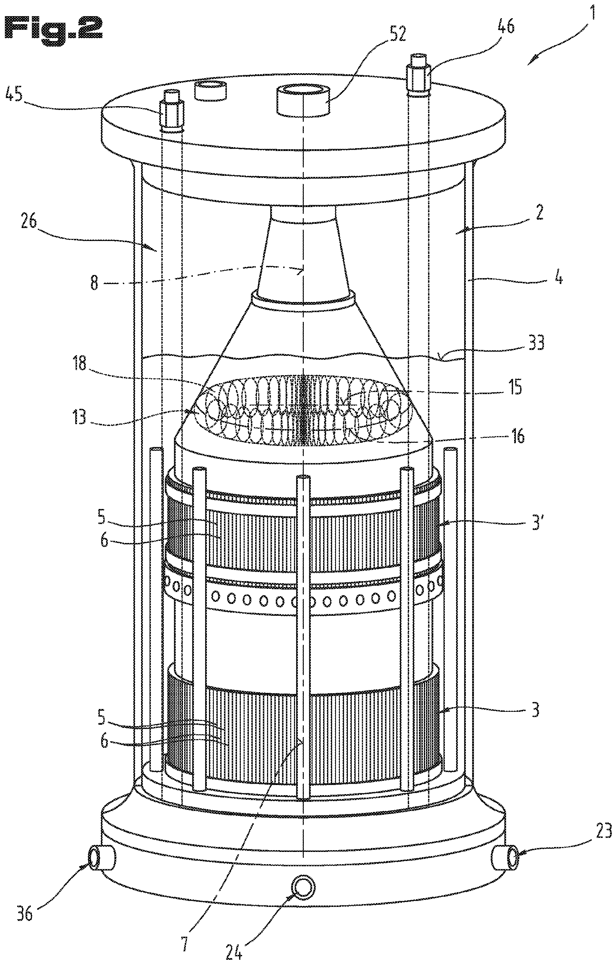

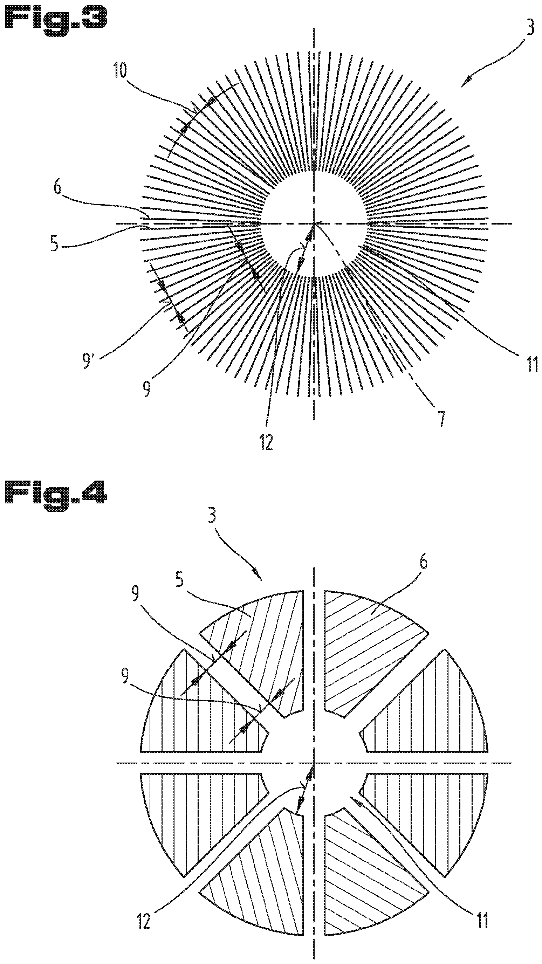

Bei dieser Ausführungsform mit sternförmig aufgefächerten bzw. strahlenartig verlaufenden Elektrodenplatten 5, 6 ist eine virtuelle Fächerachse 7 dieser Elektrodenanordnung 3 im Wesentlichen auf einer virtuellen Zylinder- bzw. Vertikalachse 8 bzw. im Wesentlichen deckungsgleich zur Zylinder- bzw. Vertikalachse 8 des Aufnahmebehälters 4 ausgerichtet bzw. positioniert, wie dies aus einer Zusammenschau von Fig. 2 und 3 ersichtlich ist. Die einzelnen plattenförmige Elektroden 5, 6 sind dabei vertikal ausgerichtet, d.h. die Flachseiten der einzelnen Elektrodenplatten 5, 6 sind wandartig ausgerichtet und mit relativ engem Abstand von 0,5 mm bis 15 mm, bevorzugt 1 mm bis 5 mm, zueinander beabstandet. Eine Dicke der plattenartigen Elektroden 5, 6 beträgt 0,1 mm bis 5 mm, bevorzugt in etwa 1 mm.

Wie am besten aus Fig. 3 ersichtlich ist, liegt zwischen benachbarten Elektrodenplatten 5, 6 der stern- bzw. fächerförmigen Elektrodenanordnung 3 ein variierender Abstand 9, 9' vor. Dieser variierende Abstand 9, 9' zwischen unmittelbar benachbarten Elektrodenplatten 5, 6 resultiert aus dem stern- bzw. fächerförmigen Verlauf der einzelnen, plattenartigen Elektroden 5, 6 in Bezug auf eine gemeinsame, virtuelle Fächerachse 7 dieser Elektrodenanordnung 3. Insbesondere verlaufen die einzelnen Elektrodenplatten 5, 6 ausgehend von der gemeinsamen, virtuellen Fächerachse 7, in radialer Richtung zur Fächerachse 7. In Draufsicht - gemäß Fig. 3 - sind die Elektroden 5, 6 also V-förmig ausgerichtet. Somit liegt zwischen unmittelbar benachbarten Elektrodenplatten 5, 6 jeweils ein Spreizungswinkel 10, insbesondere ein sogenannter Mittelpunktswinkel bzw. ein Gradmaß α vor, welches von der Anzahl der kreis- bzw. strahlenförmig um die Fächerachse 7 angeordneten Paare von Elektrodenplatten 5, 6 abhängig ist, wie dies der Fig. 3 eindeutig zu entnehmen ist. Durch diese sternförmige Anordnung der jeweiligen Elektrodenplatten 5, 6 und den sich daraus einstellenden, variierenden Abständen 9, 9' in Abhängigkeit von der Entfernung zur Fächerachse 7, wird die Effektivität des Elektrolyseprozesses begünstigt. Insbesondere kann durch den variierenden Abstand 9, 9' bzw. durch den definierten Spreizungswinkel 10 zwischen benachbarten Elektrodenplatten 5, 6 unterschiedlichen Wasserqualitäten bzw. unterschiedlichen Leitfähigkeiten des Elektrolyten besser Rechnung getragen werden. Insbesondere ist auch dann ein hocheffizienter bzw. leistungsstarker Elektrolyseprozess ausführbar, wenn verschiedene bzw. allmählich schwankende oder driftende Wasserqualitäten vorliegen bzw. wenn deren Leitfähigkeit unterschiedlich ist. Das heißt, die angegebene, sternförmige Ausführung ist bezüglich variierender Wasserqualitäten bzw. bezüglich sich verändernder Leitfähigkeiten oder bezüglich sonstiger physikalischer Eigenschaften, welche sich während des Andauerns bzw. Fortschreitens im Elektrolyseprozess verändern, relativ unempfindlich. Darüber hinaus wird durch diese Maßnahmen das Ausgasen der Elektrolyseprodukte, insbesondere des Wasserstoffes und des Sauerstoffes, aus der Elektrodenanordnung 3 begünstigt bzw. unterstützt. Dies bewirkt eine höhere Effizienz bzw. eine höhere Elektrolyseleistung innerhalb einer definierten Zeitspanne. Entsprechend einer praktikablen Ausgestaltung beträgt der zwischen benachbarten Elektroden 5, 6 ausgeführte Abstand 9 in einem der Fächerachse 7 nächstliegenden Endabschnitt ca. 0,6 mm und der Abstand 9' in dem von der Fächerachse 7 abgewandten Endabschnitt ca. 4 mm.

In Draufsicht betrachtet ist die sternförmige Elektrodenanordnung 3 hinsichtlich ihrer Umgrenzung bevorzugt kreisförmig ausgebildet. Es ist aber auch eine polygone Umrisskontur denkbar. Entsprechend einer besonders zweckmäßigen Ausgestaltung ist die stern- bzw. fächerartige Elektrodenanordnung 3 in Draufsicht kreisringförmig ausgeführt, so wie dies am besten aus Fig. 3 ersichtlich ist. Insbesondere kann rings um die Fächerachse 7 eine zylindrische oder rohrförmige Freistellung 11 ausgebildet sein, welche vollständig mit dem Elektrolyt gefüllt sein kann und/oder zumindest teilweise als Abströmungsraum bzw. als Überlauf- oder Ablaufkanal für überschüssige bzw. überlaufende Elektrolytflüssigkeit oder für Elektrolytschaum fungieren kann, wie dies im Nachfolgenden noch näher erläutert wird. D.h., dass die einzelnen Elektrodenplatten 5, 6 bevorzugt unter Einhaltung eines definierten radialen Abstandes 12 um die Fächerachse 7 aufgefächert bzw. aufeinanderfolgend angeordnet sind und dabei radial zur Fächerachse 7 orientiert sind, wie dies am besten aus Fig. 3 ersichtlich ist. Insgesamt betrachtet bildet eine derart ausgeführte Elektrodenanordnung 3 einen im Wesentlichen hohlzylindrischen Körper aus, wie dies aus einer Zusammenschau der Fig. 2 und 3 zu entnehmen ist. Dieser hohlzylindrische Elektrodenkörper weist dabei eine Vielzahl von lamellenartig geschichteten, jedoch zueinander beabstandeten, unterschiedlich gepolte Elektrodenplatten 5, 6 auf, die zaun- bzw. strahlenartig um die gemeinsame Zylinder- bzw. Fächerachse 7 verlaufen. Die einzelnen plattenförmigen Elektroden 5, 6 stellen dabei in Draufsicht quasi die von der Fächerachse 7 ausgehenden, imaginären Strahlen der sternförmigen Elektrodenanordnung 3 dar.

Die einzelnen Elektrodenplatten 5, 6 weisen dabei eine einheitliche bzw. gleichbleibende Dicke bzw. Stärke in Bezug auf die einander gegenüberliegenden Flachseiten der Plattenelektroden auf. An Stelle der Ausbildung von plattenförmigen Elektroden 5, 6 ist es auch möglich, in Draufsicht auf die Elektrodenanordnung 3 im Wesentlichen kreissektorförmige Elektroden 5, 6, insbesondere kreissektorförmige Anoden und Kathoden auszubilden, wie dies aus Fig. 4 beispielhaft und schematisch ersichtlich ist.

Diese in Draufsicht bzw. im Querschnitt kreissektorförmig ausgebildeten Elektroden 5, 6 sind ebenso um eine gemeinsame Fächerachse 7 angeordnet. Die einzelnen kreissektorförmigen Elektroden 5, 6 sind dabei bevorzugt in einem radialen Abstand 12 zur Fächerachse 7 angeordnet. Auch hierbei ist eine stern- bzw. fächerförmige Anordnung der im Querschnitt - gemäß Fig. 4 - kreissektor-förmigen bzw. annähernd kreissektorförmigen Elektrodenplatten 5, 6 vorgesehen. Auch diese Elektrodenanordnung 3 weist somit eine im Wesentlichen hohlzylindrische Körperform auf, nachdem rings um die virtuelle bzw. gedachte Fächerachse 7 bevorzugt eine zylindrische bzw. rohrförmige Freistellung 11 vorgesehen ist. Im Unterschied zu der in Fig. 3 dargestellten Ausführungsform bleibt jedoch ein Abstand 9 zwischen benachbarten Elektroden 5, 6 in Bezug auf unterschiedliche radiale Abstände zur Fächerachse 7 konstant oder annähernd konstant, wie dies aus Fig. 4 entnehmbar ist.

In axialer Richtung der virtuellen Zylinder- bzw. Vertikalachse 8, d.h. in axialer Richtung der vertikalen Achse des Aufnahmebehälters 4, ist bevorzugt zumindest oberhalb und/oder unterhalb der Elektrodenanordnung 3, welche ausführungsgemäß sternförmig ausgebildet ist, wenigstens eine elektromagnetische Spule 13 angeordnet. Das von dieser elektromagnetischen Spule 13 durch Beaufschlagung mit elektrischer Energie aufgebaute elektromagnetische Feld wirkt dabei auf den Elektrolyten und auch auf die Elektrodenanordnung 3 in der Reaktionskammer 2 ein. D.h., dass die Spule 13 derart angeordnet bzw. dimensioniert ist, dass die Feldlinien des elektromagnetischen Feldes den Elektrolyten und auch die anodischen und kathodischen Elektroden 5, 6 der Elektrodenanordnung 3 schneiden bzw. beeinflussen.

Bevorzugt ist die wenigstens eine Elektrodenanordnung 3 vollständig in den Elektrolyten, welcher vorzugsweise durch Wasser oder durch eine wässrige Lösung gebildet ist, eingetaucht. Bevorzugt ist aber auch die wenigstens eine elektromagnetische Spule 13 unterhalb eines regulären bzw. minimalen Flüssigkeitsstandes 14 für den Elektrolyten angeordnet. D.h., dass bevorzugt auch die elektromagnetische Spule 13 zur Generierung eines elektromagnetischen Feldes zumindest überwiegend, bevorzugt vollständig, in den Elektrolyten eingetaucht ist. Dies ist wichtig, um einerseits den Elektrolyten und andererseits zumindest indirekt auch die anodischen und kathodischen Elektroden 5, 6 in Schwingungen bzw. in hochfrequente Vibrationen zu versetzen und damit die Ablösung von Gasblasen an den Elektroden 5, 6 und die Ausgasung der Wasserstoff- bzw. Sauerstoffbläschen aus dem flüssigen Elektrolyten zu unterstützen bzw. zu beschleunigen. Insbesondere versetzt das elektromagnetische Feld der wenigstens einen Spule 13 die anodischen und kathodischen Elektroden 5, 6 der Elektrodenanordnung 3 derart in mechanische Schwingungen, dass eine Ablösung von an den anodischen und kathodischen Elektroden 5, 6 entstehenden Gasblasen, insbesondere der jeweiligen Sauerstoff- und Wasserstoffbläschen, unterstützt ist. Zudem bewirkt das elektromagnetische Feld der wenigstens einen elektromagnetischen Spule 13 eine Ionisierung und eine Verstärkung bzw. Intensivierung des elektrolytischen Vorganges.

Die anodischen und kathodischen Elektroden 5, 6 bestehen aus einem ferromagnetischen, insbesondere aus einem mit magnetischen Feldern beeinflussbaren Material, wie z.B. aus eisenhältigen Metallen und/oder aus Edelmetallen, beispielsweise dem sogenannten Nirosta-Metall, oder aus einem sonstigen, nicht rostenden Stahl. Durch die hochfrequenten, mechanischen Schwingungen der elektromagnetischen Spule 13, welche relativ kleine Amplitude besitzen, wird die Gasablösung an den Elektroden 5, 6 verstärkt bzw. beschleunigt. Damit einhergehend wird die wirksame Fläche der Elektroden 5, 6 gegenüber dem Elektrolyten möglichst hoch gehalten, sodass die Effektivität bzw. die Produktivität des elektrolytischen Vorganges bzw. der Elektrodenflächen der Elektroden 5, 6 hoch gehalten bzw. maximiert wird. Dies beschleunigt den Elektrolysevorgang bzw. wird dadurch der Zerlegungsprozess in Bezug auf eine definierte Zeitspanne verbessert bzw. maximiert. D.h. die elektrolytische Leistung bzw. die Zerlegungsleistung des elektrolytischen Reaktionssystems 1 kann dadurch verbessert bzw. gesteigert werden. Insbesondere wird durch die genannten Maßnahmen die verrichtete Umwandlungs- bzw. Zerlegungsarbeit pro Zeiteinheit gesteigert, sodass auch mit relativ kleinvolumigen bzw. kompakt aufgebauten Reaktionssystemen 1 hohe Abgabeleistungen an Wasserstoff- und Sauerstoffgas bzw. in Bezug auf ein entsprechendes Gasgemisch erzielt werden. Das angegebene elektrolytische Reaktionssystem 1 besitzt also eine hohe Reaktionsfreudigkeit bzw. Reaktionsschnelligkeit. Die zumindest teilweise in den Elektrolyten eingetauchte elektromagnetische Spule 13 bietet dabei einen Synergieeffekt, nachdem sie zum einen eine Ionisation bewirkt und zum anderen als Schwingungserzeuger für den Elektrolyten bzw. für die Elektroden 5, 6 fungiert.

Entsprechend einer vorteilhaften Alternativ- oder Weiterbildung ist oberhalb der wenigstens einen elektromagnetischen Spule 13 eine weitere Elektrodenanordnung 3' aus einer Mehrzahl von anodischen und kathodischen Elektroden 5, 6 angeordnet. Auch diese weitere, oberhalb der elektromagnetischen Spule 13 angeordnete Elektrodenanordnung 3' ist bevorzugt vollständig, insbesondere möglichst vollständig, in den flüssigen, insbesondere wässrigen Elektrolyten innerhalb der Reaktionskammer 2 eingetaucht.

Wie in Fig. 1 beispielhaft und schematisch bzw. prinzipiell angedeutet wurde, wirken die elektromagnetischen Felder der energiebeaufschlagten elektromagnetischen Spule 13 auf die Elektroden 5, 6 der unterhalb und/oder oberhalb angeordneten Elektrodenanordnung 3, 3' vibrierend ein bzw. wirkt die energiebeaufschlagte elektromagnetische Spule 13 auch auf den Elektrolyten mit Vibrationen bzw. Schwingungen ein, sodass eine Gasblasenablösung von den Elektroden 5, 6 bzw. eine Gasblasenförderung im Elektrolyten unterstützt bzw. verstärkt ist.

Alternativ ist es auch denkbar, die elektromagnetische Spule 13 unterhalb der Elektrodenanordnung 3 auszubilden, insbesondere im Bodenabschnitt der Reaktionskammer 2 bzw. des den Elektrolyten aufnehmenden Aufnahmebehälters 4 anzuordnen.

Bevorzugt ist die Elektrodenanordnung 3 in einem vertikalen Abstand zum Bodenabschnitt bzw. zur Bodenplatte der Reaktionskammer 2 angeordnet. Dadurch liegt unterhalb der Elektrodenanordnung 3 ein definiertes Elektrolytvolumen vor bzw. kann sich dadurch unterhalb der Elektrodenanordnung eine bestimmte Elektrolytmenge ansammeln und ein bodennaher Strömungskanal unterhalb der Elektrodenanordnung 3 gebildet werden. Eine in axialer Richtung zur Zylinder- bzw. Vertikalachse 8 unterhalb der Elektrodenanordnung 3 platzierte elektromagnetische Spule 13' ist dabei bevorzugt ebenso zum Bodenabschnitt der Reaktionskammer 2 distanziert, um einen Strömungsaufbau im Elektrolyten innerhalb der Elektrodenanordnung 3 ausgehend vom Bodenabschnitt in vertikaler Richtung nach oben, insbesondere in Richtung zum Gasraum des elektrolytischen Reaktionssystems 1 zu ermöglichen.

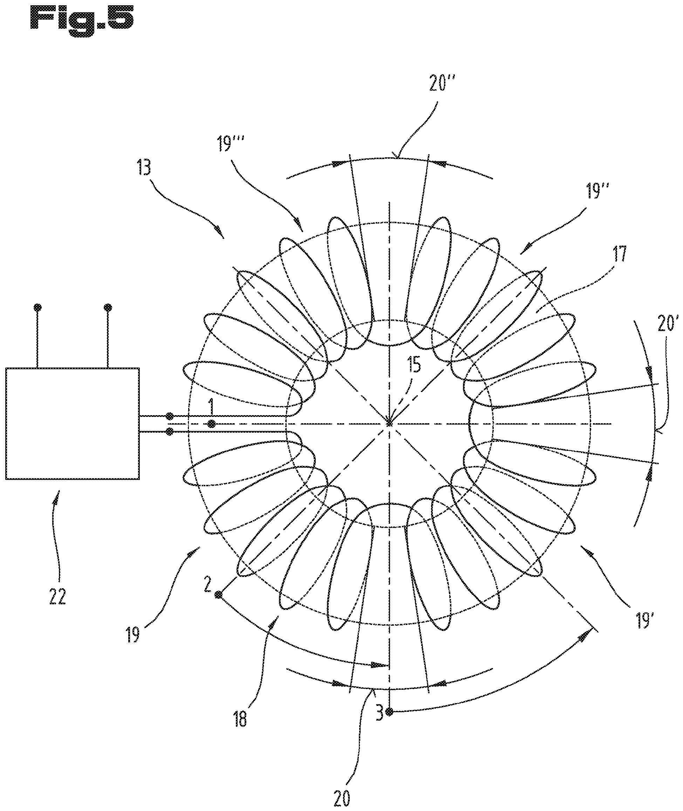

Entsprechend einer vorteilhaften Ausführungsform, wie sie aus einer Zusammenschau der Figuren 1 und 5 ersichtlich ist, ist die wenigstens eine elektromagnetische Spule 13 in Draufsicht im Wesentlichen ringförmig ausgebildet. Ein Zentrums- bzw. Mittelpunkt 15 dieser torusförmigen elektromagnetischen Spule 13 liegt dabei auf oder nahe der Zylinder- bzw. Vertikalachse 8 des Aufnahmebehälters 4 bzw. auf oder nahe der Fächerachse 7 der Elektrodenanordnung 3. D.h., dass die im Wesentlichen scheibenförmige Mittelebene 16 der Spule 12 quer, insbesondere rechtwinkelig zur Zylinder- bzw. Vertikalachse 8 bzw. rechtwinkelig zur Fächerachse 7 ausgerichtet ist, wie dies am besten aus Fig. 1 ersichtlich ist.

Bevorzugt ist ein Wicklungskörper 17 der Spule 13 ring- bzw. torusförmig ausgebildet. Dieser Wicklungskörper 17 ist vorzugsweise aus einem nicht-magnetisierbaren Material, insbesondere aus Kunststoff oder dgl., gebildet. D.h., dass die elektromagnetische Spule 13 bevorzugt eisenkernlos ausgeführt, insbesondere als Luftspule ausgebildet ist. Dieser Wicklungskörper 17 trägt wenigstens eine Spulenwicklung 18, welche aus einer Mehrzahl von Windungen, insbesondere aus hunderten oder tausenden von Windungen besteht, welche um den Wicklungskörper 17 gewickelt sind. Anstelle der Ausbildung eines Wicklungskörpers 17 ist es aber auch möglich, die wenigstens eine Spulenwicklung 18 selbsttragend auszuführen, d.h. ohne einen Wicklungskörper 17 zu formen und somit quasi eigenstabil auszuführen.

Die einzelnen Windungen der Spulenwicklung 18 sind radial bzw. im Wesentlichen radial zur ringförmigen Spule 13 ausgerichtet. Insbesondere verlaufen die einzelnen Windungen kreisförmig bzw. wickelartig um den wulstartigen Wicklungskörper 17, wie dies am besten Fig. 5 zu entnehmen ist. Entsprechend einer bevorzugten Ausführungsform sind vier um den Kreisumfang des Wicklungskörpers 17 bzw. der Spule 13 verteilt angeordnete, jeweils zueinander beabstandet gewickelte Teilwicklungen 19, 19', 19", 19‴ ausgebildet. Die einzelnen Teilwicklungen 19-19‴ sind dabei in Serie geschaltet. Vorzugsweise ist zwischen den einzelnen Teilwicklungen 19-19‴ ein Wicklungsabstand 20, 20', 20" ausgebildet.

Entsprechend einer vorteilhaften Weiterbildung sind drei jeweils um 45° zur Spulenachse bzw. zum Zentrums- bzw. Mittelpunkt 15 versetzt angeordnete, übereinander gewickelte Spulenwicklungen ausgebildet. Insbesondere wird dadurch eine zumindest dreilagige Spulenwicklung 18 gebildet, deren Wicklungsabstände 20, 20', 20" in Kreisumfangsrichtung der torusförmigen Spule 13 aufeinanderfolgen bzw. zueinander versetzt ausgebildet sind.

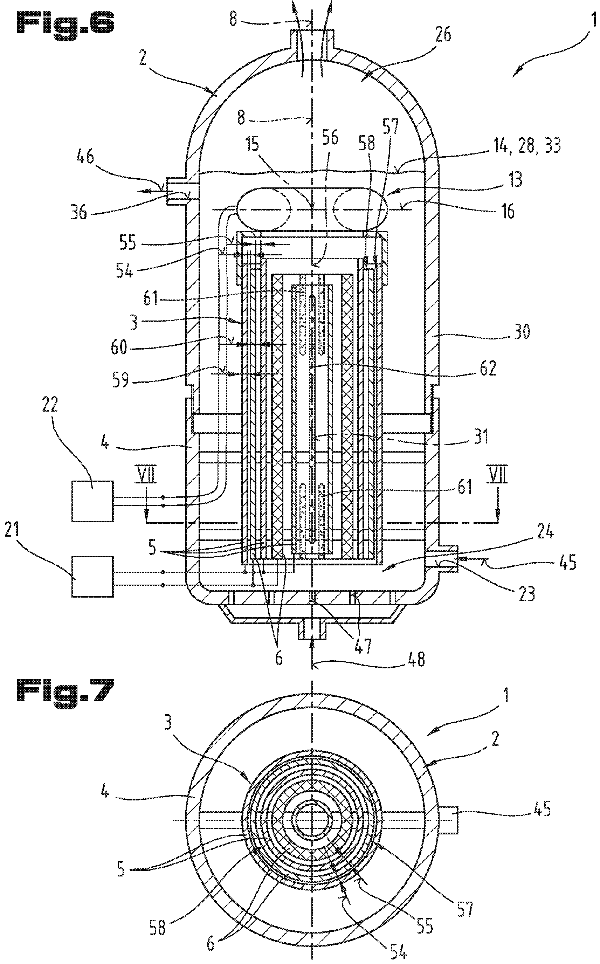

Entsprechend einer vorteilhaften Ausführungsform ist die wenigstens eine elektromagnetische Spule 13 mit der Elektrodenanordnung 3 lastabtragend verbunden bzw. gegenüber der Elektrodenanordnung 3 lastabtragend abgestützt. Das heißt, dass die wenigstens eine elektromagnetische Spule 13 beispielsweise nicht unmittelbar mit der Reaktionskammer 2, sondern vielmehr möglichst direkt mit der Elektrodenanordnung 3 mechanisch verbunden ist. Dadurch wir eine möglichst intensive Schwingungsübertragung auf die Elektrodenanordnung 3 erzielt. Bei der Ausgestaltung nach Fig. 2 ist die elektromagnetische Spule 13 in einem hohlkegeligen bzw. trichterartigen Halteelement aufgenommen, welches Halteelement an der Oberseite der Elektrodenanordnung 3 abgestützt ist. Damit werden mechanische Schwingungen bzw. Vibrationen der elektromagnetischen Spule 13 auf die Elektrodenanordnung 3, und umgekehrt, übertragen. Bei der Ausführungsform nach den Fig. 6, 7 ist die wenigstens eine elektromagnetische Spule 13 über eine klammerartige Abstütz- bzw. Haltevorrichtung auf der Oberseite der Elektrodenanordnung 3 lastabtragend befestigt bzw. abgestützt.

Die Elektroden 5, 6 sind zweckmäßigerweise derart gehaltert bzw. gelagert, dass sie im Elektrolytbad möglichst frei schwingen können. Hierfür ist eine einseitige bzw. zungenartige Halterung bzw. Lagerung günstig. Alternativ ist eine Halterung der Elektroden 5, 6 an maximal zwei einander gegenüberliegenden Randabschnitten bzw. Stirnendenden der Elektroden 5, 6 denkbar, wie dies in Fig. 2 beispielhaft veranschaulicht ist.

Die einzelnen anodischen und kathodischen Elektroden 5, 6 der Elektrodenanordnung 3 werden in an sich bekannter Weise von einer ersten elektrischen Energiequelle 21 mit elektrischer Energie versorgt. Die erste Energiequelle 21 ist dabei bevorzugt zur pulsierenden Energieversorgung der anodischen und kathodischen Elektroden 5, 6 ausgebildet.

Die wenigstens eine elektromagnetische Spule 13 wird von einer weiteren elektrischen Energiequelle 22 mit elektrischer Energie versorgt. Bevorzugt ist die weitere elektrische Energiequelle 22 zur pulsierenden Energieversorgung der wenigstens einen elektromagnetischen Spule 13 ausgebildet.

Die erste Energiequelle 21 und die weitere Energiequelle 22 speisen die Elektroden 5, 6 bzw. die Spule 13 bevorzugt jeweils mit pulsierender Gleichspannung mit variierender Amplitudenhöhe und definierten Impulspausen zwischen den einzelnen Spannungs- bzw. Energieimpulsen. Die Energiequellen 21, 22 sind bevorzugt durch elektrische Energieumformer, insbesondere durch Wandlerschaltungen bzw. durch Signalgeneratoren gebildet, wie sie aus dem Stand der Technik hinlänglich bekannt sind. Die jeweiligen Energiequellen 21, 22 werden ausgehend von einem öffentlichen Stromversorgungsnetz oder bevorzugt von einer Gleichspannungsquelle, insbesondere von einer elektrochemischen Spannungsquelle, wie z.B. einem Akkumulator, mit elektrischer Energie gespeist. Vorzugsweise ist der elektrische Energielieferant für die Energiequellen 21, 22 durch einen Akkumulator, insbesondere durch wenigstens einen Bleiakkumulator mit einer Klemmenspannung von 12V bzw. 24V gebildet. Insbesondere kann der Energielieferant durch das 12V/24V-Bordnetz eines Kraftfahrzeuges gebildet sein.

Entsprechend einer vorteilhaften Maßnahme ist eine Energiefrequenz der ersten Energiequelle 21 zur Energieversorgung der anodischen und kathodischen Elektroden 5, 6 im Vergleich zu einer Energiefrequenz der zweiten Energiequelle 22 zur Energieversorgung der wenigstens einen elektromagnetischen Spule 13 derart gewählt, dass das elektrolytische Reaktionssystem 1 zumindest zeitweise nahe dessen oder bei dessen Resonanzfrequenz arbeitet. Insbesondere sind die jeweiligen Energiefrequenzen der ersten Energiequelle 21 und der weiteren Energiequelle 22 derart aufeinander abgestimmt, dass das elektrolytische System in einem resonanten oder quasi resonanten Zustand arbeitet und dabei eine hocheffiziente bzw. hochwirksame chemische Zerlegung des Elektrolyten in gasförmigen Wasserstoff und Sauerstoff bietet. Dadurch wird u.a. das Ausmaß bzw. die Effizienz der Ablösung der jeweiligen Gasblasen von den anodischen und kathodischen Elektroden 5, 6 maßgeblich beeinflusst. Insbesondere wird durch die Wirkung der elektrischen bzw. elektromagnetischen Felder in der Reaktionskammer 2 zum einen der elektrolytische Zerlegungsprozess unterstützt bzw. beschleunigt. Zum anderen wird durch die elektromagnetische Einkopplung von Kräften bzw. Schwingungen in den Elektrolyten und/oder in die metallischen, insbesondere ferromagnetischen, Elektroden 5, 6 eine Vibration bzw. Schwingung erzeugt, welche die Gasablösung und somit den Zerlegungs- bzw. Aufspaltungsprozess begünstigt.

Die Impulsfrequenz der ersten Energiequelle 21 zur Versorgung der anodischen und kathodischen Elektroden 5, 6 ist dabei um ein vielfaches höher als die Impuls- bzw. Energiefrequenz der zweiten Energiequelle 22 zur Versorgung der zumindest einen elektromagnetischen Spule 13. Die Versorgungsfrequenz der ersten Energiequelle 21 beträgt im Vergleich zur Versorgungsfrequenz der zweiten Energiequelle 22 zumindest das hundertfache bis in etwa das zehntausend- oder hunderttausendfache, bevorzugt in etwa das tausendfache. Das Frequenzverhältnis zwischen der elektrischen Energieversorgung für die Elektrodenanordnung 3 und der elektrischen Energieversorgung für die wenigstens eine elektromagnetische Spule 13 beträgt somit bevorzugt in etwa 1000:1. Beispielsweise beträgt die Energiefrequenz für die Spule 13 in etwa 30 Hz und die Energiefrequenz für die anodischen und kathodischen Elektroden 5, 6 in etwa 30 kHz. Selbstverständlich können auch andere Basis- bzw. Frequenzwerte an den Energiequellen 21, 22 eingestellt bzw. generiert werden.

Ein Spannungspegel der ersten Energiequelle 21 für die Versorgung der anodischen und kathodischen Elektroden 5, 6 kann mehrere 100 V betragen.

Die jeweiligen Spannungs- bzw. Frequenzwerte sind primär von der baulichen Anordnung und den geometrischen Abmessungen der jeweiligen Komponenten innerhalb der Reaktionskammer 2 abhängig und können empirisch bzw. im Rahmen des fachmännischen Könnens jeweils abgestimmt bzw. angepasst werden.

Entsprechend einer vorteilhaften Ausführungsform ist im unteren Abschnitt der Reaktionskammer 2, insbesondere des Elektrolytvolumens bzw. des Aufnahmebehälters 4 für den Elektrolyten, zumindest eine Zulauföffnung 23 zur Auffüllung und/oder kontinuierlichen oder diskontinuierlichen Nachfüllung von Elektrolytflüssigkeit angeordnet. Durch den im unteren Abschnitt, insbesondere im Bodenabschnitt des Elektrolytbades zugeführten bzw. zuführbaren Elektrolyten entsteht eine Verwirbelung bzw. Aufwirbelung der Elektrolytflüssigkeit, wodurch in vorteilhafter Art und Weise die Ablösung von Gasblasen an den anodischen und kathodischen Elektroden 5, 6 begünstigt bzw. beschleunigt wird.

Alternativ oder in Kombination dazu kann in der Reaktionskammer 2, insbesondere im Aufnahmebehälter 4 für den Elektrolyten zumindest ein Mittel 24 zur Verwirbelung des Elektrolyten, insbesondere zum Aufbau einer Strömung im Elektrolyten, beispielsweise einer turbulenten Strömung, ausgebildet sein. Dieses Verwirbelungsmittel 24 kann durch beliebige aus dem Stand der Technik bekannte Maßnahmen zur Erzeugung von Strömungen bzw. Verwirbelungen in einem Flüssigkeitsbad gebildet sein. Eine vorteilhafte Ausführungsform sieht vor, dass das Mittel 24 zur Verwirbelung des Elektrolyten durch in die Reaktionskammer führende Ansaug- und/oder Auslassdüsen 25 für den Elektrolyten gebildet ist. Bevorzugt ist eine Mehrzahl von Ansaug- und/oder Auslassdüsen 25 für den Elektrolyten vorgesehen, welche vorzugsweise dem Aufnahmebehälter 4 für den Elektrolyten zugeordnet sind. In Abhängigkeit der gewünschten Verwirbelung bzw. Verteilung der jeweiligen Wirbelkräfte kann die Anzahl dieser Ansaug- und/oder Auslassdüsen 25 im Rahmen der jeweiligen Erfordernisse stark variieren. Auch in Abhängigkeit des Durchmessers dieser Ansaug- und/oder Auslassdüsen 25 können zumindest zwei oder auch hunderte solcher Ansaug- und/oder Auslassdüsen 25 bevorzugt im Bodenbereich des Aufnahmebehälters 4 für den Elektrolyten ausgebildet sein. Entsprechend einer vorteilhaften Weiterbildung sind zumindest einzelne Wirkungsachsen einer Mehrzahl von Ansaug- und/oder Auslassdüsen 25 geneigt zum Bodenabschnitt ausgebildet. Insbesondere können die Wirkungsachsen der Ansaug- und/oder Auslassdüsen 25 winkelig zur Zylinder- bzw. Vertikalachse 8 der Reaktionskammer 2 ausgerichtet sein, um im Elektrolytbad eine innige Verwirbelung bzw. weitreichende Strömung aufzubauen, welche den Abtransport der Wasserstoff- bzw. Sauerstoffblasen von den anodischen und kathodischen Elektroden 5, 6 bzw. vom Inneren des Elektrolyten in Richtung nach oben zur Ausgasungszone, insbesondere zu einem Gasraum 26 der Reaktionskammer 2 begünstigt.

Anstelle einer durch Flüssigkeits- bzw. Gaseinbringung aufgeprägten Verwirbelung bzw. Strömung im Elektrolyten ist es selbstverständlich auch möglich, das Mittel 24 zur Verwirbelung des Elektrolyten durch zumindest ein Rührwerk zu bilden, welches in die Elektrolytflüssigkeit eingetaucht ist. Entsprechend einer vorteilhaften Maßnahme ist das Mittel 24 zur Erzwingung einer Strömung im Elektrolyten derart ausgebildet, dass eine in etwa schraubenlinienförmige Strömung um die Zylinder- bzw. Vertikalachse 8 des Aufnahmebehälters 4 bzw. der Reaktionskammer 2 aufgebaut wird, wobei eine Fortpflanzungsrichtung dieser schraubenlinienförmigen Strömung ausgehend vom Bodenabschnitt des Elektrolyten in Richtung zur Oberfläche des Elektrolytbades verläuft.

Entsprechend einer vorteilhaften Ausführungsform ist in der Reaktionskammer 2 zumindest eine Überlaufkante 27 vorgesehen, welche zur Begrenzung eines maximalen Flüssigkeitsstandes 28 des Elektrolyten ausgebildet ist. Entsprechend einer vorteilhaften Ausführungsform ist diese zumindest eine Überlaufkante 27 durch wenigstens eine obere Begrenzungskante 29 eines hohlzylindrischen bzw. hohlprismatischen Elektrolytbehälters 30 gebildet. Dieser Elektrolytbehälter 30 weist bevorzugt eine vertikal ausgerichtete Zylinderachse 31 auf, welche sich bevorzugt mit der Zylinder- bzw. Vertikalachse 8 der Reaktionskammer 2 deckt bzw. zumindest annähernd überdeckt. Die wenigstens eine Überlaufkante 27 kann alternativ oder zusätzlich zur oberen Begrenzungskante 29 des Elektrolytbehälters 30 durch wenigstens eine Bohrung oder einen sonstigen Durchbruch im Mantel des Elektrolytbehälters 30 gebildet sein. Vorzugsweise ist jedoch der obere Abschnitt des Elektrolytbehälters 30 möglichst offen, insbesondere über die gesamte Querschnittsfläche offen ausgeführt, um auch eine gute Absonderung bzw. Ableitung eines während des Elektrolyseprozesses zumeist entstehenden Schaums 32, insbesondere einer sich auf dem Elektrolyten ausbildenden Schaumkrone zu begünstigen. Insbesondere dann, wenn der Flüssigkeits- bzw. Elektrolytpegel auf gleicher Höhe mit der Überlaufkante 37 liegt, wird eine effiziente Ableitung des Schaums 32 am Elektrolyten bewerkstelligt. Ein initialer Füllstand 33 des Elektrolyten liegt bevorzugt etwas unterhalb der Überlaufkante 27. Während einem aktiven elektrolytischen Prozess steigt vor allem durch die Bildung von Gasblasen im Elektrolyten das Elektrolytvolumen deutlich erkennbar an. Das heißt, dass während dem Betrieb der elektrolytischen Reaktionssystems 1 der Elektrolytpegel in der Reaktionskammer 2, insbesondere im Aufnahme- bzw. Elektrolytbehälter 4, 30 ansteigt. Somit wird ein initialer Füllstand 33 für den Elektrolyten bevorzugt unterhalb der Überlaufkante 27 des Elektrolytbehälters 30 festgelegt. Die Überlaufkante 27 definiert jedenfalls den maximal möglichen Elektrolytpegel im Elektrolytbehälter 30. Beim Erreichen bzw. Überschreiten dieses maximalen Elektrolytpegels wird eine effiziente Ableitung des Elektrolytschaums bzw. der Schaumkrone erzielt.

Entsprechend dem dargestellten Ausführungsbeispiel erfolgt die Ableitung der Schaumkrone bzw. des Schaums 32 oder auch der überfließenden bzw. überschüssigen Elektrolytflüssigkeit ausgehend vom Zentrumsbereich des Elektrolytbehälters 30 in Richtung nach außen, insbesondere in radialer Richtung zur Vertikal- bzw. Zylinderachse 8, 31. Entsprechend einer alternativen oder kombinatorischen Ausführungsform ist es auch möglich, die Ableitung von Schaum 32 bzw. von über die wenigstens eine Überlaufkante 27 fließendem Elektrolyten in einen im Zentrumsbereich des Elektrolytbehälters 30 angeordneten Ablaufkanal 34 zu bewerkstelligen, wie dies mit strichlierten Linien angedeutet wurde. In diesem zentrisch bzw. zentral angeordneten Ablaufkanal 34 kann überquellendes Elektrolyt bzw. über die Überlaufkante 27' tretender Elektrolytschaum in Richtung nach unten abgeleitet und bevorzugt wieder in den Elektrolytbehälter 30 eingeschleust werden, wie dies im Nachfolgenden näher erläutert wird.

Bevorzugt ist im Bodenabschnitt der Reaktionskammer 2 ein Sammelabschnitt 35 für über die Überlaufkante 27 geflossenen Elektrolyten oder Elektrolytschaum ausgebildet. Dieser Sammelabschnitt 35 erstreckt sich über eine bestimmte vertikale Höhe der Reaktionskammer 2 und verhindert bzw. vermindert einen Austritt der elektrolytisch gewonnenen Gase aus einer Auslassöffnung 36, welche zur kontrollierten Ableitung des Elektrolyten aus der Reaktionskammer 2 dient. Dieser Sammelabschnitt 35 kann durch einen bestimmten Elektrolytpegel im Bodenabschnitt der Reaktionskammer 2 oder durch eine sonstige siphonartige Gassperre gebildet sein. Der Sammelabschnitt 35 bzw. der dementsprechende Flüssigkeitssiphon bewirkt vor allem, dass die Reaktionskammer 2 möglichst gasdicht abgeschlossen ist, bzw. dass ein Austritt oder eine Absaugung von Wasserstoff- und Sauerstoffgas über eine bodennahe Auslassöffnung 36 für den Elektrolyten möglichst unterbunden ist. Der beispielsweise siphonartige Sammelabschnitt 35 für über die Überlaufkante 27 geflossene Elektrolytflüssigkeit bzw. für abgesonderten Elektrolytschaum verschließt also die Auslassöffnung 36 relativ gasdicht, wohingegen eine kontrollierte Ableitung der Elektrolytflüssigkeit aus der Reaktionskammer 2 über die wenigstens eine Auslassöffnung 36 ermöglicht ist. Insbesondere ist sicherzustellen, dass ein bestimmter Flüssigkeitspegel innerhalb des Sammelabschnittes 35 besteht bzw. aufgebaut wird, um eine ausreichend gasdichte Gassperre zu erzielen.

Der Flüssigkeitspegel im Sammelabschnitt 35 ist bevorzugt niedriger als der reguläre Füllstand 33 für den Elektrolyten innerhalb des Elektrolytbehälters 30. Der Sammelabschnitt 35 kann darstellungsgemäß rings um den Elektrolytbehälter 30 ausgebildet sein oder bei zentraler Einleitung des überschüssigen Elektrolyts in einen zentral angeordneten Ablaufkanal 34 im Zentrumsbereich des Elektrolytbehälters 30 vorgesehen sein, wie dies anhand der in strichlierten Linien dargestellten Ausführungsvariante dargestellt wurde. Alternativ ist selbstverständlich auch eine kombinierte äußere und innere Ansammlung, oder auch eine kaskadierte Elektrolytansammlung, zur Absonderung und Ausgasung von Elektrolytschaum bzw. Elektrolytflüssigkeit mittels zumindest einem Sammelabschnitt 35 für Elektrolytflüssigkeit ausführbar.

Zweckmäßig ist es weiters, wenigstens eine Rückführung 37 für den über die Überlaufkante 27 des Aufnahme- bzw. Elektrolytbehälters 4, 30 geflossenen Elektrolytanteil vorzusehen. Mittels dieser Rückführung 37 erfolgt zumindest eine Wiedereinschleusung des Elektrolyten in den hohlzylindrischen bzw. hohlprismatischen Elektrolytbehälter 30 bzw. in die Reaktionskammer 2. Bevorzugt ist innerhalb der wenigstens einen Leitung für die Rückführung 37 des Elektrolyten auch ein Flüssigkeitstank 38, insbesondere ein Wasserbehälter 39, vorgesehen, in welchem eine gewisse Menge an Elektrolyt, insbesondere an flüssigem Elektrolyt in Form von Wasser, vorrätig gehalten bzw. gepuffert wird. Ausgehend von diesem Flüssigkeitstank 38 wird dem elektrolytischen Prozess innerhalb der Reaktionskammer 2 kontinuierlich oder diskontinuierlich Elektrolytflüssigkeit zugeführt. Die wenigstens eine Rückführung 37 verläuft dabei quasi durch den bzw. über den Flüssigkeitstank 38. Das heißt, dass die Rückführung 37 einerseits in den Flüssigkeitstank mündet und dass die Rückführung 37 ausgehend vom Flüssigkeitstank 38 wieder in Richtung zur Reaktionskammer 2 fortgesetzt wird, um einen Zulauf bzw. eine Nachfüllung in Bezug auf die elektrolytische Flüssigkeit im Aufnahme- bzw. Elektrolytbehälter 4, 30 zu erzielen. Dieser Elektrolytkreislauf 41 zwischen der Reaktionskammer 2 und dem Flüssigkeitstank 38 bzw. dem Wasserbehälter 39 ist in hydraulischer Hinsicht mit dem Vor- und Rücklauf von Kraftstoff-Versorgungssystemen für Verbrennungskraftmaschinen vergleichbar.

In der Rückführung 37 kann dabei wenigstens eine Filtervorrichtung 40 zur Ausfilterung von Rückständen, insbesondere von Verunreinigungen im Elektrolyten bzw. im elektrolytisch behandelten Wasser angeordnet sein. Um einen aktiven bzw. erzwungenen Wasser- bzw. Elektrolytkreislauf 41 aufzubauen, kann in die Rückführung 37 bzw. in die Zulaufleitung für den Elektrolyten in Bezug auf die Reaktionskammer 2, zumindest eine Flüssigkeitspumpe 42 eingebunden sein. Zweckmäßig ist es, wenn die Rückführung 37 auch als Kühlvorrichtung 43 für den Elektrolyten dient bzw. eine Kühlvorrichtung 43 umfasst. Diese Kühlvorrichtung 43 kann durch die Leitungsverbindungen der Rückführung 37 per se und/oder durch zusätzliche Wärmetauscher, insbesondere durch Luft/Flüssigkeitstauscher, wie z.B. Kühlrippen, gebildet sein.

Diese Wärmetauscher 44 bzw. Kühlrippen können im Leitungsverbund und/oder am Flüssigkeitstank 38 bzw. Wasserbehälter 39 ausgebildet sein. Entsprechend einer bevorzugten Ausführungsform ist die Kühlvorrichtung 43 derart dimensioniert, bzw. die Rückführung 37 derart bemessen, dass die Temperatur des Elektrolyten in einem Bereich zwischen 20°C und 60°C, insbesondere in einem Bereich zwischen 28°C und 50°C, bevorzugt 35°C bis 43°C, gehalten wird. Vor allem im zuletzt genannten Temperaturbereich des Elektrolyten findet ein optimierter bzw. relativ effizienter Elektrolyseprozess statt. Insbesondere ist in diesem Temperaturbereich nur eine relativ geringe Menge bzw. Leistung an elektrischer Energie erforderlich. Die Kühlvorrichtung 43 kann selbstverständlich auch durch andere passiv und/oder aktiv wirkende Kühlvorrichtungen, wie sie in zahlreichen Ausführungen aus dem Stand der Technik bekannt sind, gebildet sein.

Entsprechend einer vorteilhaften Ausführungsform weist das elektrolytische Reaktionssystem 1 also einen kontinuierlichen oder diskontinuierlichen Zufluss 45 und Abfluss 46 für den Elektrolyten auf. Insbesondere wird durch diesen Zufluss 45 und Abfluss 46 des Elektrolyten ein zeitbezogener allmählicher Austausch bzw. eine Nachfüllung des Wasser umfassenden oder durch Wasser gebildeten Elektrolyten in der Reaktionskammer 2 bzw. in dessen Elektrolytbehälter 30 geschaffen bzw. aufgebaut. Bevorzugt ist dabei ein in sich geschlossener Elektrolytkreislauf 41 aufgebaut, in welchem der Flüssigkeitstank 38 und die zumindest eine Flüssigkeitspumpe 42 implementiert ist.

Entsprechend einer vorteilhaften, weiterbildenden Maßnahme ist bevorzugt im Bodenabschnitt und/oder im Mantelbereich der Reaktionskammer 2 zumindest eine Durchtrittsöffnung 47 für in die Reaktionskammer 2, insbesondere in den Aufnahmebehälter 4 für den Elektrolyten einzuleitende Umgebungsluft 48 ausgebildet. Alternativ oder zusätzlich dazu kann die wenigstens eine Durchtrittsöffnung 47 auch zur Zuführung von Stickstoff oder von sonstigen nicht brennbaren Gasen in den Aufnahmebehälter 4, insbesondere in den Elektrolytbehälter 30, vorgesehen sein. Die wenigstens eine Durchtrittsöffnung 47 mündet dabei direkt in das Elektrolytbad, welches sich während des Betriebs des Reaktionssystems 1 in der Reaktionskammer 2, insbesondere im Elektrolytbehälter 30 befindet. Bevorzugt ist eine Mehrzahl von im Bodenabschnitt und/oder Mantelbereich des Elektrolytbehälters 30 verteilt angeordneten Durchtrittsöffnungen 47 für Umgebungsluft 48 und/oder Stickstoff ausgebildet. Insbesondere erfolgt eine direkte Zuführung bzw. Einleitung von Umgebungsluft 48 und/oder Stickstoff in den Elektrolyten, sodass ein Flüssigkeits- bzw. Gasgemisch und eine Strömung bzw. Aufwirbelung im Elektrolyten entsteht. Gegebenenfalls kann ein Regulierungsmittel 49, insbesondere eine Ventilanordnung oder dergleichen vorgesehen sein, welches zur Regulierung der in den Elektrolyten einströmenden Menge und/oder des Druckes der Umgebungsluft 48 bzw. des Stickstoffs ausgebildet ist. Bevorzugt erfolgt dieses Einbringen der Umgebungsluft 48 bzw. von Stickstoff oder von sonstigen nicht brennbaren Gasen unter Druck. D.h., dass die Umgebungsluft 48 bzw. der Sauerstoff in den Elektrolyten aktiv eingeblasen wird. Gegebenenfalls ist auch durch Aufbau von Unterdruck in der Reaktionskammer 2 ein Einsaugen von dementsprechenden Gasen oder Gasgemischen, wie z.B. Luft, möglich. Durch die vorhergehend beschriebenen Durchtrittsöffnungen 47, mit welchen Umgebungsluft 48 bzw. Stickstoff direkt in den Elektrolyten eingeblasen bzw. eingebracht wird, wird zum einen die Ablösung von an der Elektrodenanordnung 3 haftenden Sauerstoff- bzw. Wasserstoffblasen unterstützt. Darüber hinaus kann auch durch diese Luft- bzw. Stickstoffeinbringung in den Elektrolyten eine Verwirbelung bzw. Aufmischung des Elektrolyten erzielt werden. Dies wirkt sich hinsichtlich der elektrolytischen Leistung, insbesondere hinsichtlich der Leistungsfähigkeit des elektrolytischen Reaktionssystems 1 positiv aus.

Bevorzugt ist eine Vielfachanordnung von Durchtrittsöffnungen 47 vorgesehen, über welche gezielt und verteilt Luft bzw. Stickstoff in den Aufnahmebehälter 4 für den Elektrolyten eingebracht wird. Entsprechend einer vorteilhaften Ausführungsform sind diese Durchtrittsöffnungen 47 im Bodenabschnitt der Reaktionskammer 2, insbesondere unterhalb der Elektrodenanordnung 3 positioniert.

Entsprechend einer vorteilhaften, weiterbildenden Maßnahme ist dem elektrolytischen Reaktionssystem 1 wenigstens ein Mittel 50 zum Aufbau von Unterdruck innerhalb der Reaktionskammer 2, insbesondere in dessen Gasraum 26 zugeordnet. Dieser Unterdruck ist dabei in Bezug auf den atmosphärischen Umgebungsdruck zu verstehen. D.h., dass das Unterdruck erzeugende Mittel 50 innerhalb der Reaktionskammer 2, insbesondere im Gasraum 26, definierte Unterdruckverhältnisse schafft. Entsprechend einer ersten Ausführungsform kann dieses Mittel 50 durch eine Unterdruckpumpe gebildet sein. Entsprechend einer vorteilhaften Ausführungsform ist dieses Mittel 50 zum Aufbau von Unterdruck durch einen an der Reaktionskammer 2 angeschlossenen Verbraucher für den chemischen Energieträger Wasserstoff gebildet. Dieser Verbraucher, welcher entsprechend einer vorteilhaften Ausführungsform durch eine Verbrennungskraftmaschine 51, insbesondere durch einen Benzin-, Gas- oder Dieselmotor gebildet ist, formt die chemische Energie des Wasserstoffes unter Freisetzung von thermischer Energie in kinetische Energie um. Der Verbraucher kann selbstverständlich auch durch ein beliebiges Heizungs- oder Generatorsystem zur Stromerzeugung gebildet sein. Entsprechend einer vorteilhaften Ausführungsform erfolgt also der Aufbau von Unterdruck in der Reaktionskammer 2 durch Aufbau einer strömungstechnischen Verbindung 52 zwischen der Reaktionskammer 2, insbesondere dessen Gasraum 26, mit einer Brennstoffzuführung 53, insbesondere mit dem Saugrohrkanal einer Verbrennungskraftmaschine 51 oder eines sonstigen Verbrennungssystems zur Umwandlung der chemischen Energie des Wasserstoff-Sauerstoff-Gemisches in thermische bzw. kinetische Energie. Auch dadurch wird die Ausgasungsleistung in Bezug auf den Elektrolyten und die Elektrodenanordnung 3 erhöht bzw. die erzielbare Elektrolyseleistung des elektrolytischen Reaktionssystems 1 gesteigert.

In den Fig. 6, 7 ist eine weitere Ausführungsform des elektrolytischen Reaktionssystems 1 zur Erzeugung von gasförmigem Wasserstoff und Sauerstoff veranschaulicht. Diese Ausführungsform ist eine gegebenenfalls für sich eigenständige Ausführungsform des erfindungsgemäßen Reaktionssystems 1. Für gleiche Teile werden dabei gleiche Bezugszeichen bzw. Bauteilbezeichnungen wie in den vorangegangenen Fig. verwendet. Um unnötige Wiederholungen zu vermeiden, wird auf die detaillierte Beschreibung zu den vorangegangenen Figuren hingewiesen bzw. Bezug genommen. Es wird ausdrücklich festgehalten, dass nicht alle der in diesen Figuren dargestellten Merkmale bzw. baulichen Maßnahmen zwingende Bestandteile des erfindungsgemäßen Reaktionssystems 1 darstellen. Darüber hinaus können Merkmalskombinationen mit Merkmalen aus den vorangegangenen Figuren erfindungsgemäße Ausführungsformen darstellen.

Auch dieses elektrolytische Reaktionssystem 1 umfasst eine Reaktionskammer 2 zur Aufnahme eines Elektrolyten, wie zum Beispiel Wasser, einer wässrigen Lösung, oder eines Wassergemisches in Verbindung mit die Leitfähigkeit erhöhenden Zusätzen. In der Reaktionskammer 2 ist darüber hinaus wenigstens eine Elektrodenanordnung 3 angeordnet, welche aus einer Mehrzahl von anodischen und kathodischen Elektroden 5, 6 gebildet ist. Bei dieser Ausführungsform ist die Elektrodenanordnung 3 durch zumindest zwei, bevorzugt mehr als zumindest drei, koaxial oder annährend koaxial ineinander angeordnete, rohrförmige Elektroden 5, 6 gebildet. Im dargestellten Ausführungsbeispiel sind fünf koaxial angeordnete, ineinander verschachtelte, insbesondere ineinander eingesetzte, rohrförmige Elektroden 5, 6 ausgebildet. In diesem Zusammenhang wird darauf hingewiesen, dass Elektroden 5, 6 mit kreisförmigem bzw. kreisringförmigem oder elliptischem Querschnitt bevorzugt sind. Selbstverständlich ist es aber auch möglich, anstelle von rohrförmigen Elektroden 5, 6 mit hohlzylindrischer Körperform, rohrförmige Elektroden 5, 6 mit prismatischer Körperform, insbesondere quadratischem, rechteckigem oder mit einem sonstigen polygonen Querschnitt vorzusehen. Die einzelnen Elektroden 5, 6 bildend bevorzugt abwechselnd bzw. aufeinander folgend jeweils Anoden und Kathoden im elektrolytischen Reaktionssystem 1 aus.

Die zylindrischen oder die aus mehreren, winkelig zueinander ausgerichteten Flächen zusammengesetzten, prismatischen Mantelflächen der einander benachbart angeordneten, rohrförmigen Elektroden 5, 6 sind zueinander beabstandet ausgebildet. Insbesondere sind zwischen den jeweiligen Zylinder- bzw. Mantelflächen, insbesondere zwischen den Innen- und Außenflächen der jeweiligen Elektroden 5, 6 definierte Abstände 54 bzw. 55 ausgebildet. Entsprechend einer vorteilhaften Maßnahme ist ein Abstand 54 oder ein Spaltmaß zwischen den rohrförmigen oder hohlprismatischen, ineinander gestellten Elektroden 5, 6 ausgehend von einem äußeren Paar von Elektroden 5, 6 im Vergleich zu einer weiter innen, insbesondere näher bei einer zentralen Rohrachse 56 angeordneten Elektrode 5, 6 oder einem weiter innen angeordneten Paar von Elektroden 5, 6 dieser rohrartigen Elektrodenanordnung 3 zunehmend oder größer werdend dimensioniert. Das heißt, dass im Zentrum der Elektrodenanordnung 3 vorliegenden Abstände 55 zwischen rohrförmigen bzw. hohlprismatischen Elektroden 5, 6 bevorzugt grö-ßer bemessen sind, als die Abstände 54 zwischen äußeren bzw. die inneren Elektroden 5, 6 umgebenden Paare von Elektroden 5, 6.

Die einzelnen, virtuellen Rohrachsen 56 der rohrförmigen Elektroden 5, 6 sind bevorzugt vertikal ausgerichtet. Dabei sind die distalen Endabschnitte der rohrförmigen Elektroden 5, 6 jeweils offen ausgeführt. Bevorzugt weisen die einzelnen rohrförmigen Elektroden 5, 6 in Bezug auf ihre Länge bzw. Höhe eine konstante Querschnittsfläche auf.

Zwischen den Mantel- oder Zylinderflächen der rohrförmigen bzw. hohlprismatischen Elektroden 5, 6 wenigstens ein zumindest annähernd hohlzylindrischer oder prismatischer Spalt 57, 58 ausgebildet ist. Durch den wenigstens einen Spalt 57, 58 zwischen den diversen Elektroden 5, 6 der Elektrodenanordnung 3 wird ein Ausperlen von Gasblasen ermöglicht bzw. begünstigt. Insbesondere können dadurch Gasblasen, welche während des Elektrolyseprozesses an den anodischen und kathodischen Elektroden 5, 6 bzw. haften bzw. entstehen, effizient in einen oberhalb des Elektrolyten liegenden Gasraum 26 abgeführt werden. Dabei kommt eine Art Sogwirkung zum Tragen, welche das Ausperlen der Gasblasen aus dem Elektrolyten unterstützt. Dieser Effekt wird durch das unterhalb der Elektrodenanordnung 3 befindliche Elektrolytvolumen und durch einen Venturi-Effekt innerhalb der rohrförmigen Elektrodenanordnung 3 verstärkt.

Insbesondere wird durch den zumindest einen annähernd hohlzylindrischen oder prismatischen Spalt 57, 58 zwischen benachbarten Elektroden 5, 6 eine Art Kaminwirkung für die Gasblasen erzielt und damit dessen Ausperlungsgeschwindigkeit bzw. Entgasungsleistung gesteigert. Durch die Kaskadierung bzw. Mehrfachanordnung von Elektroden bzw. Elektrodenpaaren 5, 6 wird dieser Effekt zusätzlich gesteigert.

In Bezug auf die virtuelle, zentrale Rohrachse 56 ist zumindest oberhalb der rohrartigen Elektrodenanordnung 3 wenigstens eine elektromagnetische Spule 13 angeordnet, wie sie im Vorhergehenden bereits beschrieben wurde. Wesentlich ist, dass das bei Energiebeaufschlagung dieser elektromagnetischen Spule 13 entstehende bzw. aufgebaute, bevorzugt wechselnde bzw. pulsierende elektromagnetische Feld auf den Elektrolyten und auch auf die Elektrodenanordnung 3 einwirkt. Insbesondere schneiden die Feldlinien mit ausreichender Intensität sowohl die Elektrodenanordnung 3, als auch das Elektrolytvolumen im elektrolytischen Reaktionssystem 1. Alternativ oder in Kombination zu einer über der Elektrodenanordnung 3 liegenden elektromagnetischen Spule 13 kann auch unterhalb der Elektrodenanordnung 3 wenigstens eine elektromagnetische Spule 13 ausgebildet sein.

Unter anderem wird durch die wenigstens eine elektromagnetische Spule 13 die Elektrodenanordnung 3 in mechanische Schwingungen bzw. Vibrationen versetzt, welche ein Ausperlen der Gasperlen aus dem Elektrolyten unterstützen bzw. beschleunigen. Darüber hinaus wirkt sich vor allem das elektrische Feld der elektromagnetischen Spule 13 auch auf den elektrolytischen Umwandlungs- bzw. Aufspaltungsprozess positiv aus.

Entsprechend einer vorteilhaften Ausführungsform weist die Reaktionskammer 2 des elektrolytischen Reaktionssystems 1 eine im Wesentlichen hohlzylindrische oder hohlprismatische Körperform auf. Die virtuelle Zylinder- bzw. Vertikalachse 8, insbesondere die Mantelfläche der Reaktionskammer 2 ist dabei vertikal oder zumindest annähernd vertikal ausgerichtet, wie dies aus Fig. 6 oder Fig. 2 beispielhaft ersichtlich ist.

Wie weiters am besten aus den Fig. 2 und 6 ersichtlich ist, ist es zweckmäßig, wenn die Reaktionskammer 2 einen im Wesentlichen hohlzylindrischen oder hohlprismatischen Aufnahmebehälter 4 umfasst bzw. aufweist, in welchem die wenigstens eine stern- oder rohrförmige Elektrodenanordnung 3 angeordnet ist. Gemäß der Ausführungsform nach den Fig. 1, 2 ist der Aufnahmebehälter 4 für den Elektrolyten und für die wenigstens eine Elektrodenanordnung 3 im oberen Endabschnitt offen ausgeführt. Zudem ist dessen Mantel- bzw. Zylinderfläche von den inneren Wandflächen der Reaktionskammer 2 beabstandet ausgebildet, wie dies am besten aus Fig. 1 ersichtlich ist. Dadurch wird in einfacher Art und Weise der vorhergehend beschriebene Abscheidungs- bzw. Sammelabschnitt 35 aufgebaut. Entsprechend einer vorteilhaften Maßnahme ist die virtuelle Fächerachse 7 der sternförmigen Elektrodenanordnung 3 bzw. die virtuelle Rohrachse 56 der rohrartigen Elektrodenanordnung im Wesentlichen auf der virtuellen Zylinderachse 8 oder deckungsgleich zur virtuellen Zylinderachse 8 des Aufnahmebehälters 4 bzw. der Reaktionskammer 2 positioniert, wie dies vor allem den Darstellungen gemäß den Fig. 1 und 6 zu entnehmen ist.

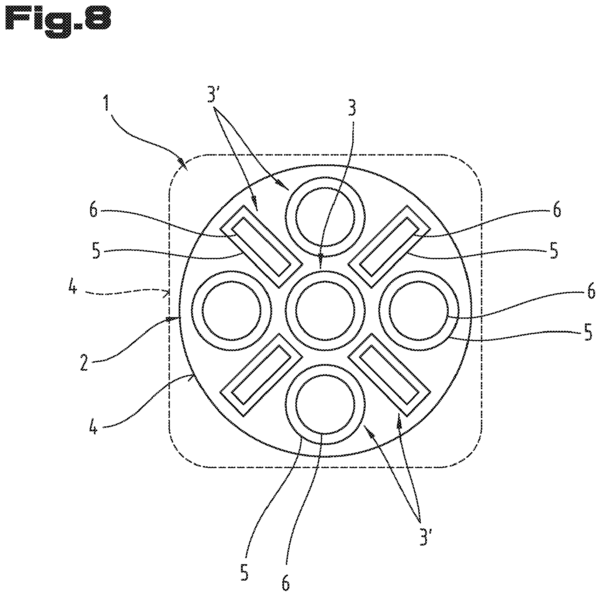

In Fig. 8 ist eine weitere, schematisierte bzw. prinzipielle Darstellung einer Elektrodenanordnung 3 ersichtlich. Dabei ist der Aufnahmebehälter 4 bzw. die Reaktionskammer 2 hohlzylindrisch, insbesondere im Querschnitt kreisförmig ausgeführt. Entsprechend einer alternativen Ausführungsform, wie sie in strichlierten Linien dargestellt wurde, kann die Reaktionskammer 2 bzw. der Aufnahmebehälter 4 auch eine sonstige hohlprismatische Körperform, insbesondere eine eckige Querschnittsform aufweisen, wobei jedoch abgerundete Ecken bzw. Kantenbereiche vorteilhaft sind. Im Inneren der Reaktionskammer 2 ist eine Mehrzahl von Elektrodenanordnungen 3, 3' vorgesehen. Insbesondere ist dabei ein Bündel von Rohrelektroden ausgebildet, wobei die einzelnen Elektrodenpaare 5, 6 innerhalb des Aufnahmebehälters 4 für den Elektrolyten verteilt angeordnet sind. Insbesondere ist dabei ist im Zentrum des Aufnahmebehälters 4 eine erste Elektrodenanordnung 3 ausgebildet und ist kreisförmig um diese zentrale Elektrodenanordnung 3 eine Mehrzahl von weiteren Elektrodenanordnungen 3' kreisförmig platziert. Ebenso ist eine Mischform von Elektrodenformen möglich. Beispielsweise können im Querschnitt kreisförmige Rohrelektroden 5, 6 und im Querschnitt eckige, beispielsweise viereckige Rohrelektroden 5, 6 kombiniert sein, um eine erhöhte Packungsdichte innerhalb des Aufnahmebehälters 4 zu erzielen.

Bei der Dimensionierung der rohrförmigen bzw. hohlprismatischen Elektroden 5, 6 ist es zweckmäßig darauf zu achten, dass deren Steifigkeitswerte ein bestimmten, oberen Grenzwert möglichst nicht überschreitet. Insbesondere sollen die Wandstärken 59, 60 der Elektroden 5, 6 derart festgelegt werden, dass das elektromagnetische Feld der wenigstens einen Spule 13 eine Anregung von mechanischen Schwingungen der Elektrodenanordnung 3 bzw. zumindest einzelner Elektroden 5, 6 bewirkt. Nachdem die Elektroden 5, 6 aus elektrisch leitendem, insbesondere aus ferromagnetischem Material gebildet sind, hat das elektromagnetische Wechselfeld bzw. das elektromagnetisch pulsierende Feld der wenigstens einen Spule 13 einen vibrierenden bzw. schwingungsanregenden Effekt. Dadurch wird die Effizienz der Ablösung von Gasperlen bzw. das Ausperlungsvermögen der Gasblasen aus dem Elektrolyten begünstigt. Insbesondere soll die Materialelastizität bzw. die Wandstärke 59, 60 der jeweiligen Elektroden 5, 6 derart gewählt sein, dass ausgehend von der elektromagnetischen Spule 13 eine möglichst intensive Schwingungsanregung erzielt wird.

Entsprechend einer vorteilhaften Weiterbildung kann zur Verstärkung dieses Ablösungsprozesses die wenigstens eine plattenförmige Elektrode 5, 6 - Fig. 1 - oder die wenigstens eine rohrförmige oder hohlprismatische Elektrode 5, 6 - Fig. 6 - wenigstens einen Schlitz 61, 62 bzw. eine Mehrzahl von Durchbrüchen oder Perforierungen aufweisen. Insbesondere weisen die jeweiligen Elektroden 5, 6 wenigstens eine mechanische Schwächung bzw. Steifigkeitsreduzierung, beispielsgemäß Schlitze 61, 62 oder Durchbrüche oder Materialaussparungen bzw. Materialeinssparungen auf, um unter Einfluss des elektromagnetischen Feldes der wenigstens einen elektromagnetischen Spule 13 in verstärkte mechanische Schwingungen versetzt zu werden. Auch diese Maßnahmen erhöhen die Leistungsfähigkeit bzw. die Reaktionszeit des elektrolytischen Reaktionssystems 1 in Bezug auf die Leistungsfähigkeit der Wasserstoffbereitstellung. Eine intensive bzw. möglichst verlustarme Schwingungsanregung für die Elektroden 5, 6 wird aber auch durch die lastabtragende Abstützung, insbesondere durch eine möglichst starre mechanische Verbindung zwischen der wenigstens einen elektromagnetischen Spule 3 und zumindest einer Elektrode 5, 6 der Elektrodenanordnung 3 erzielt. Diese mechanische Verbindung bzw. Haltevorrichtung ist bevorzugt elektrisch isolierend ausgeführt.

Anspruchsgemäß ist die Elektrodenanordnung 3 aus wenigstens einem Bündel von koaxial ineinander gestellten, rohrförmigen Elektroden gebildet. Damit sind optimale Elektrolyseleistungen erzielbar. Es ist aber auch denkbar, mit sonstigen, aus dem Stand der Technik bekannten Elektrodenanordnungen, beispielsweise mit einer Kaskaden- bzw. Reihenanordnung von plattenförmigen Elektroden, ähnliche Wirkungen bzw. Effekte zu erzielen, sodass die anspruchsgemäßen Elektrodenanordnungen nicht unbedingt als zwingend zu verstehen sind. Insbesondere ist bei andersartigen Elektrodenanordnungen lediglich mit relativ geringfügigen Leistungs- bzw. Effizienzeinbußen zu rechnen.

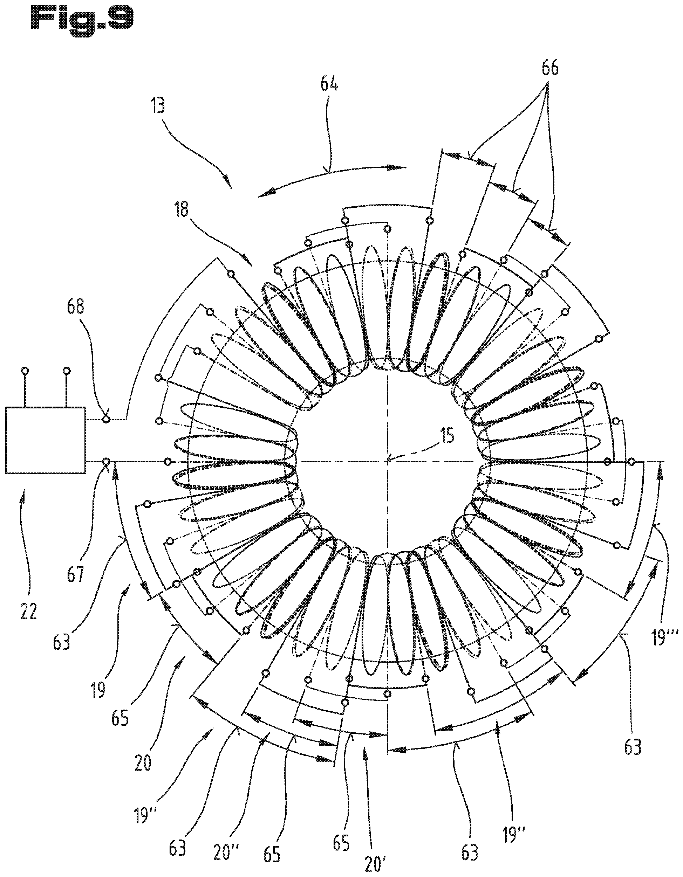

In Fig. 9 ist eine weitere Ausführungsform der wenigstens einen elektromagnetischen Spule 13 veranschaulicht, wie sie beim elektrolytischen Reaktionssystem 1 entsprechend den vorhergehenden Darlegungen in vorteilhafter Art und Weise eingesetzt werden kann. Diese Ausführungsform der elektromagnetischen Spule 13 ist somit in Kombination mit den vorhergehenden Merkmalen zu einem vorteilhaften elektrolytischen Reaktionssystem 1 kombinierbar. In den nachfolgenden Abschnitten werden für gleiche Teile gleiche Bezugszeichen bzw. Bauteilbezeichnungen wie in den vorangegangenen Figuren verwendet. Um unnötige Wiederholungen zu vermeiden, wird auf die detaillierte Beschreibung in den vorangegangenen Figuren hingewiesen bzw. Bezug genommen.

Die schematisch veranschaulichte, elektromagnetische Spule 13 stellt eine Alternative zu der in Fig. 5 dargestellten Ausführungsform dar und wird bevorzugt analog zu den vorhergehenden Ausführungen, wie sie in den Figuren 1, 2 und 6 veranschaulicht sind, oberhalb und/oder unterhalb einer sternförmigen oder rohrartigen Elektrodenanordnung 3 angeordnet, sodass deren elektromagnetisches Feld infolge einer Beaufschlagung mit elektrischer Energie zum einen auf den Elektrolyten und zum anderen auf die Elektrodenanordnung 3 einwirkt.

Die somit mindestens einmal vorgesehene, elektromagnetische Spule 13 ist im Wesentlichen torus- oder ringförmig ausgebildet, wobei sie eine Mehrzahl von elektrisch in Serie geschalteten Teilwicklungen 19, 19', 19", 19‴ umfasst. Die einzelnen Teilwicklungen 19, 19', 19", 19‴ der elektromagnetischen Spule 13 erstrecken sich dabei jeweils über einen Umfangswinkel 63, welcher nur einen Bruchteil des vollen Ringumfanges 64, d.h. einen Winkel-Bruchteil von 360° der torusförmigen, elektromagnetischen Spule 13 beträgt. Der Umfangswinkel 63 der einzelnen, in Serie geschalteten Teilwicklungen 19, 19', 19", 19 ` ` ` beträgt typischerweise zwischen 20° bis 50°, insbesondere zwischen 25° und 45°, bevorzugt in etwa 30° in Bezug auf den vollen Ringumfang 64 der Spule 13.

Die in Serie geschalteten, in Umfangsrichtung der ringförmigen Spule 13 aufeinander folgenden Teilwicklungen 19, 19', 19", 19‴ bilden zueinander einen Freiwinkel 65 aus, der den vorhergehend beschriebenen Wicklungsabständen 20, 20', 20", 20‴ entspricht. Innerhalb dieses Freiwinkels 65 ist zwischen unmittelbar aufeinanderfolgenden Teilwicklungen 19, 19', 19", 19‴ keine elektromagnetische Wicklung ausgeführt, sondern quasi ein Leerabstand ohne elektromagnetischem Wicklungskörper vorgesehen. Dieser Freiwinkel 65 zwischen direkt aufeinanderfolgenden, in Serie geschalteten Teilwicklungen 19, 19', 19", 19 ` ` ` beträgt zweckmäßigerweise zwischen 10° bis 30°, insbesondere zwischen 15° bis 25°, bevorzugt in etwa 20°. Dieser Freiwinkel 65 bzw. der dementsprechende Wicklungsabstand 20, 20', 20", 20‴ definiert Zonen innerhalb der elektromagnetischen Spule 13, in welchen andere elektromagnetische Verhältnisse vorherrschen, als in jenen Zonen der elektromagnetischen Spule 13, in welchen die seriell aufeinanderfolgenden Teilwicklungen 19, 19', 19", 19‴ angeordnet bzw. positioniert sind. Die durch den Freiwinkel 65 definierten, wicklungslosen Freiräume zwischen den einzelnen Teilwicklungen 19, 19', 19", 19 ` ` ` ergeben eine Diversität innerhalb des mit der elektromagnetischen Spule 13 aufgebauten bzw. aufbaubaren elektromagnetischen Feldes, welche den elektrolytischen Prozess im elektrolytischen Reaktionssystem 1 begünstigt.

Ein besonders günstiger Aufbau des mit der elektromagnetischen Spule 13 generierten bzw. generierbaren elektromagnetischen Feldes wird erreicht, wenn der Umfangswinkel 63 der einzelnen Teilwicklungen 19, 19', 19", 19 ` ` ` und der Freiwinkel 65 zwischen den einzelnen Teilwicklungen 19, 19', 19", 19 ` ` ` derart gewählt ist, dass nach mehr als einem vollen Ringumlauf, d.h. nach Überschreiten von 360° Wicklungserstreckung, zwischen übereinander gewickelten Teilwicklungen 19, 19', 19", 19‴ ein Versatzwinkel 66 ausgebildet ist. D.h., dass dadurch die Teilwicklungen 19, 19', 19", 19 ` ` ` des ersten Umlaufes um die ring- bzw. torusförmige Spule 13 gegenüber den Teilwicklungen 19, 19', 19", 19 ` ` ` des zweiten bzw. jeden weiteren Ringes aus Teilwicklungen 19, 19', 19", 19 ` ` ` um einen Versatzwinkel 66 versetzt sind. Somit sind übereinanderliegende Teilwicklungen 19, 19', 19", 19‴ in Umfangsrichtung der ringförmigen Spule 13 stets zueinander versetzt bzw. verschoben, sodass bevorzugt keine 100%ige Überlappung zwischen übereinander gewickelten Teilwicklungen 19, 19', 19", 19 ` ` ` vorliegt.

Entsprechend einer zweckmäßigen Ausführungsform ist eine Anzahl der aufeinanderfolgenden, in Serie geschalteten Teilwicklungen 19, 19', 19", 19"`derart gewählt, dass in etwa drei volle Ringumläufe ausgebildet sind, d.h. dass sich die in Serie geschalteten Teilwicklungen 19, 19', 19", 19‴ in etwa über 1080° der ring- bzw. torusförmigen Spule 13 erstrecken.

Entsprechend einer zweckmäßigen Ausführungsform sind die einzelnen Teilwicklungen 19, 19', 19", 19‴ einlagig gewickelt, wobei die nach einem vollen Ringumlauf ausgebildeten Teilwicklungen 19, 19', 19", 19 ` ` ` zwar mit dem entsprechenden Versatzwinkel 66, jedoch im wesentlichen luftspaltfrei über darunter bzw. innen liegenden Teilwicklungen 19, 19`, 19", 19‴ gewickelt sind.

Die elektromagnetische Spule 13 ist bevorzugt kernlos, insbesondere ohne elektromagnetisch wirksamen Kern ausgeführt. Insbesondere ist die elektromagnetische Spule 13 als Luftspule ausgeführt, sodass das generierte elektromagnetische Feld in hohem Ausmaß auf den Elektrolyten und auf die Elektrodenanordnung 3 einwirkt und damit die physikalischen und chemischen Abläufe im elektrolytischen Reaktionssystem 1 hochgradig beeinflusst.

Eine Teilwicklung 19, 19', 19", 19 ` ` ` besteht aus einer Vielzahl von Windungen, insbesondere aus dutzenden, hunderten oder tausenden Windungen aus einem isolierten Leiter, insbesondere einem lackisolierten Kupferdraht. Die bevorzugt zweilagig, insbesondere dreilagig ausgeführte, elektromagnetische Spule 13 aus seriell miteinander verschalteten, zueinander beabstandeten Teilwicklungen 19, 19', 19", 19‴ weist somit einen ersten Spulenanschluss 67 und einen weiteren Spulenanschluss 68 auf, zwischen welchen die kreisförmig verlaufenden, zueinander distanzierten Teilwicklungen 19, 19', 19", 19 ` ` ` ausgebildet sind. Via diese Spulenanschlüsse 67, 68 wird die elektromagnetische Spule 13 mit der elektrischen Energiequelle 22 verbunden, wie dies in den vorhergehenden Beschreibungsteilen dargelegt wurde.

Daraus folgt, dass ein Durchmesser der äußeren Teilwicklungen 19, 19', 19", 19‴ größer bemessen ist, als ein Durchmesser der inneren Teilwicklungen 19, 19', 19", 19‴ der ring- bzw. torusförmigen, elektromagnetischen Spule 13.

Anstelle der schematisch dargestellten, elektrischen Verbindungsbügel zwischen den unmittelbar aufeinander folgenden Teilwicklungen 19, 19', 19", 19 ` ` ` ist es selbstverständlich auch möglich, die einzelnen Teilwicklungen 19, 19', 19", 19 ` ` ` unterbrechungsfrei bzw. zusammenhängend, insbesondere aus einem einstückigen, elektrischen Leiter zu wickeln, sodass zumindest einige der dazwischen liegenden Verbindungsbügel erübrigt sind.

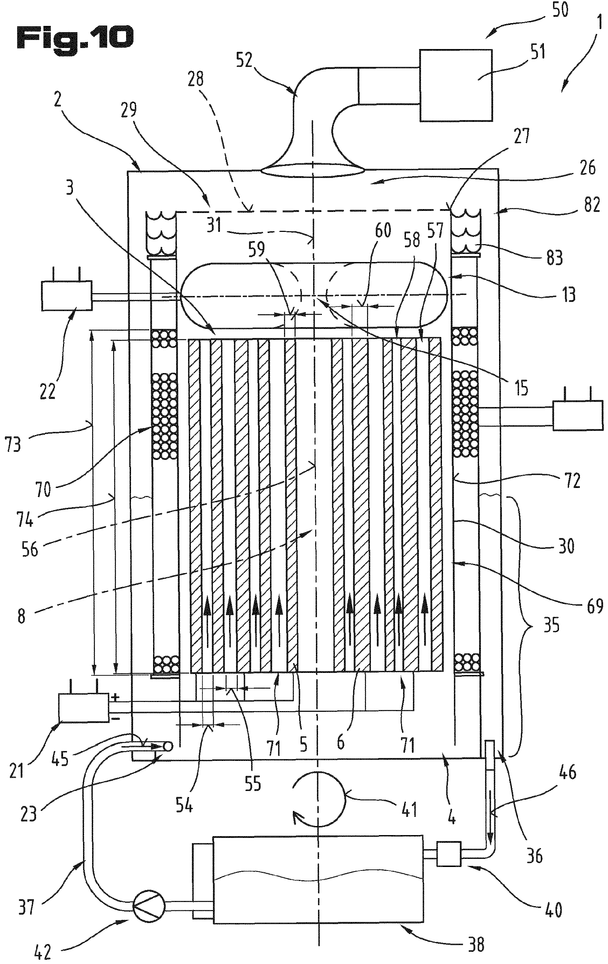

Fig. 10 zeigt ein weiteres Ausführungsbeispiel des elektrolytischen Reaktionssystems 1. Für vorhergehend bereits beschriebene Komponenten wurden dabei gleiche Bezugszeichen verwendet und sind die vorhergehenden Beschreibungsteile sinngemäß auf gleiche Komponenten mit gleichen Bezugszeichen übertragbar.

Auch dieses elektrolytische Reaktionssystem 1 ist zur hocheffizienten Erzeugung von gasförmigem Wasserstoff und Sauerstoff ausgelegt. Es umfasst eine innere Reaktionskammer 69 zur Aufnahme eines Elektrolyten, eine Elektrodenanordnung 3 mit einer Mehrzahl von anodischen und kathodischen Elektroden 5, 6, zumindest zwei elektromagnetische Spulen 13, 70 und einen Elektrolytkreislauf 41, welcher zur Umwälzung des Elektrolyten und zur strömungstechnischen Hindurchführung des Elektrolyten durch die Elektrodenanordnung 3 vorgesehen ist. Die Strömung des Elektrolyten durch die Elektrodenanordnung 3 hindurch wird mittels zumindest einer Flüssigkeitspumpe 42 unterstützt bzw. bewirkt. Insbesondere ist durch die zumindest eine Flüssigkeitspumpe 42 eine Zirkulation des Elektrolyten im elektrolytischen Reaktionssystem 1 bzw. eine zwingend aufgeprägte Strömung in zumindest einem durch die Elektroden 5, 6 der Elektrodenanordnung 3 definierten Strömungskanal 71 erzielbar.

Die Elektroden 5, 6 und die ringförmige, elektromagnetische Spule 13, welche oberhalb und/oder unterhalb der Elektrodenanordnung 3 positioniert ist, befinden sich innerhalb der vorzugsweise zylindrischen, inneren Reaktionskammer 69. Die weitere elektromagnetische Spule 70 ist hohlzylindrisch ausgebildet und an einer äußeren Mantelfläche 72 des Elektrolytbehälters 30 angebracht, vorzugsweise unmittelbar bzw. spaltfrei auf die Mantelfläche 72 aufgewickelt. Der in Vertikalrichtung nach oben hin offene Elektrolytbehälter 30 definiert die innere Reaktionskammer 69. Die hohlzylindrische elektromagnetische Spule 70 weist eine axiale Länge bzw. Höhe 73 auf, welche in etwa einer vertikalen Länge 74 der Elektrodenanordnung 3 entspricht. Die vertikal ausgerichtete elektromagnetische Spule 70 ist vorzugsweise entlang der gesamten vertikalen Länge 74 der Elektroden 5, 6 installiert. Alle vorhergehend erwähnten Teile des Reaktionssystems 1 sind in der äußeren Reaktionskammer 2 untergebracht.

Eine verbesserte Effizienz des elektrolytischen Reaktionssystems 1 wird durch die spezifische Gestaltung und/oder Ausrichtung der Elektroden 5, 6, durch die strukturelle Kombination und technische Wechselwirkung zwischen der jeweiligen Elektrodenanordnung 3 und dem gepulsten elektromagnetischen Feld der über und/oder unter der Elektrodenanordnung 3, sowie au-βen um die Elektrodenanordnung 3 angeordneten elektromagnetischen Spulen 13, 70, sowie durch die gerichtete Strömung des Elektrolyten erreicht.

Die Elektrodenanordnung 3 umfasst mehrere rohrförmige, insbesondere hohlzylindrische Elektroden 5, 6, die mit einem gleichbleibenden oder unterschiedlichen, radialen Abstand 54, 55 koaxial ineinander angeordnet sind. Das Zentrum bzw. die Zylinder- bzw. Vertikalachse 8 der Elektrodenanordnung 3 deckt sich vorzugsweise mit der Zylinderachse 31 des Elektrolytbehälters 30. In Radialrichtung unmittelbar benachbarte Elektroden 5, 6 sind elektrisch voneinander isoliert bzw. in Abhängigkeit der Leitfähigkeit des Elektrolyten elektrisch miteinander gekoppelt. Eine Wandstärke 59, 60 der Elektroden 5, 6 wird so gering wie möglich gehalten. Der begrenzende Faktor ist eine ausreichende strukturelle Steifigkeit der Konstruktion, um Kurzschlüsse zwischen den Elektroden 5, 6 zu verhindern. Die Wandstärke 59, 60 der zylindrischen Elektroden 5, 6 liegt beispielsweise in einem Bereich zwischen 1 mm bis 3 mm.

Die Elektroden 5, 6 sind an ihrem unteren Abschnitt in der Reaktionskammer 69 elektrisch isoliert befestigt. Im oberen Abschnitt können sie ebenso durch elektrisch isolierende Einlagen gehaltert bzw. zueinander abgestützt sein. Die Strömungskanäle 71 bzw. die im Querschnitt ringförmigen Spalte 57, 58 zwischen den unmittelbar benachbarten Elektroden 5, 6 sollen minimal gehalten werden. Der radiale Abstand 54, 55 zwischen unmittelbar benachbarten Elektroden 5, 6 kann in einem Bereich zwischen 1 mm und 3 mm liegen.

Das Material der Elektroden 5, 6 ist ein Metall oder eine Legierung mit guten magnetischen Eigenschaften und einem mittleren oder niedrigen Überpotential, das auch als Katalysator zur Verbesserung der Gasbildungsreaktion dienen kann. Beispielsweise kann ein rostfreier Stahl mit einem hohen Nickelgehalt verwendet werden.

Eine Stromversorgungseinheit bzw. die Energiequelle 21 liefert Gleichstrom oder gepulsten Strom an die Elektroden 5, 6, wobei zwischen benachbarten Elektroden 5, 6 genügend elektrisches Potential erzeugt wird, um eine hohe Geschwindigkeit der Gasentwicklungsreaktion aufrecht zu erhalten. Der gepulste Strom wird vorzugsweise in einem Frequenzbereich zwischen 1 kHz und 200 kHz geliefert.

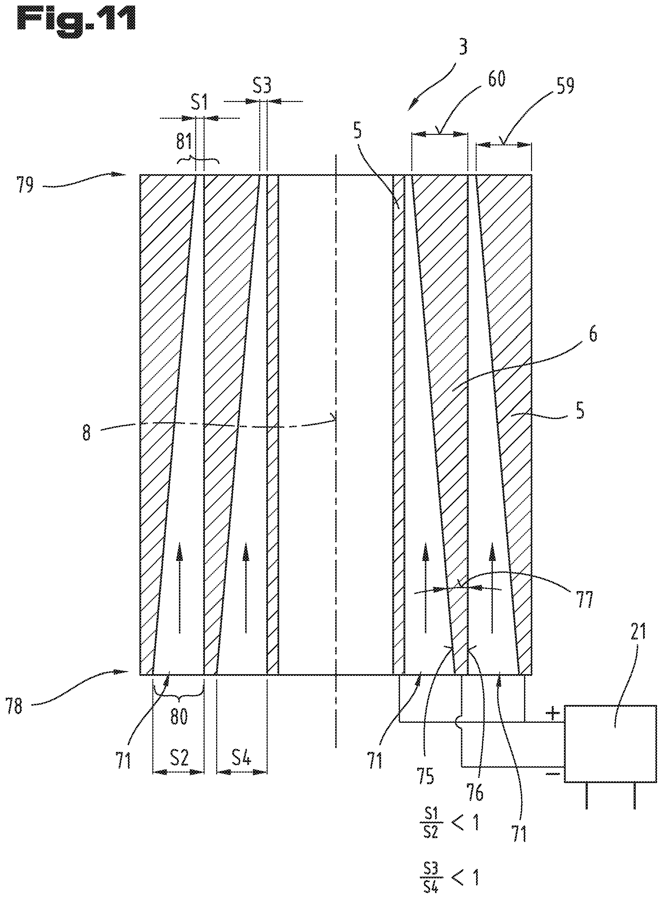

Eine vorteilhafte Ausgestaltung des elektrolytischen Reaktionssystems 1 liegt darin, dass die Elektroden 5, 6 rohrförmig, insbesondere in Form von Hohlzylindern ausgebildet sind, wobei die radial innere und die radial äußere Mantelfläche 75, 76 von zumindest einer der Elektroden 5, 6 in wenigstens einem vorbestimmten Winkel 77 zueinander geneigt sind, wie dies in Fig. 11 beispielhaft ersichtlich ist. Die Abbildung gemäß Fig. 11 stellt dabei einen Vertikalschnitt durch die Elektrodenanordnung 3 dar.

Insbesondere ist es zweckmäßig, wenn die zylindrischen Mantelflächen 75, 76 oder die aus mehreren, winkelig zueinander ausgerichteten Flächen zusammengesetzten Mantelflächen der einander benachbart angeordneten, rohrförmigen Elektroden 5, 6 zueinander beabstandet angeordnet sind und dabei zwischen zueinander beanstandeten Mantelflächen 75, 76 der Elektroden 5, 6 wenigstens einen Strömungskanal 71 für den Elektrolyten ausbilden. Ein solcher Strömungskanal 71 erstreckt sich dabei zwischen einem ersten axialen Ende 78 für den Eintritt des Elektrolyten in die Elektrodenanordnung 3 und einem zweiten axialen Ende 79 für den Austritt des Elektrolyten aus der Elektrodenanordnung 3. Wesentlich ist dabei, dass der wenigstens eine Strömungskanal 71 wenigstens einen ersten Strömungsquerschnitt 80 und wenigstens einen zweiten Strömungsquerschnitt 81 aufweist, wobei der zweite Strömungsquerschnitt 81 kleiner bemessen ist als der erste Strömungsquerschnitt 80 und der vergleichsweise kleinere zweite Strömungsquerschnitt 81 in einem zum zweiten axialen Ende 79 der Elektrodenanordnung 3 nächstliegenden Teilabschnitt des wenigstens einen Strömungskanals 71 ausgebildet ist.

Im dargestellten Ausführungsbeispiel ist der vergleichsweise kleinere zweite Strömungsquerschnitt 81 bzw. der generell kleinste Strömungsquerschnitt 81 des zumindest einen Strömungskanals 71 unmittelbar am zweiten axialen Ende 79 der Elektrodenanordnung 3 ausgebildet ist. Der zumindest eine Strömungskanal 71 weist dabei einen sich kontinuierlich verjüngenden bzw. düsenförmig verlaufenden Strömungsquerschnitt 80, 81 zwischen dem ersten und zweiten axialen Ende 79, 80 der Elektrodenanordnung 3 auf. Insbesondere kann der zumindest eine Strömungskanal 71 im Längsschnitt durch die Elektrodenanordnung 3 eine keilförmig sich zuspitzende Begrenzungskontur aufweisen, wie dies in Fig. 11 beispielhaft dargestellt ist. Dadurch wird eine möglichst rationelle und wirtschaftliche Fertigung der Elektrodenanordnung 3 ermöglicht. Darüber hinaus ist die angestrebte Beschleunigungswirkung gegenüber dem Elektrolyten zuverlässig erzielbar.

Zumindest eine oder jede der Elektroden 5, 6 kann so hergestellt sein, dass eine ihrer Ober- bzw. Mantelflächen 75, 76, also entweder die radial innere oder die radial äußere Mantelfläche 75, 76, eine unter dem vorbestimmten Winkel 77 gegenüber einer Vertikalen geneigte Seite bzw. Mantelfläche 75, 76 aufweist. So ist entweder der Innendurchmesser des axial unteren Endes der rohrförmige Elektrode 5, 6 in einem bestimmten Verhältnis bzw. Ausmaß gegenüber dem Innendurchmesser des axial oberen Endes der rohrförmigen Elektrode 5, 6 grö-ßer bemessen. Alternativ kann der Außendurchmesser des axial unteren Endes der rohrförmige Elektrode 5, 6 in einem bestimmten Verhältnis bzw. Ausmaß gegenüber dem Außendurchmesser des axial oberen Endes der rohrförmigen Elektrode 5, 6 kleiner bemessen sein. Aufgrund dieser Konstruktion hat der zumindest eine Strömungskanal 71 bzw. der Spalt 57, 58 zwischen den Mantelflächen benachbarter Elektroden 5, 6, in welchem sich der Elektrolyt befindet, einen sich verändernden bzw. nach oben hin abnehmenden Strömungsquerschnitt 80, 81. Dadurch kann die Elektrodenanordnung 3 möglichst einfach und kostengünstig, aber dennoch mit erhöhter Funktionalität aufgebaut werden. Vorzugsweise ist der zumindest eine Spalt 57, 58 zwischen unmittelbar benachbarten Elektroden 5, 6 im Bereich des unteren bzw. ersten axialen Endes 78 der Elektrodenvorrichtung 3 maximal bzw. größer und im Bereich des oberen bzw. zweiten axialen Endes 79 minimal bzw. kleiner. In Bezug auf Fig. 11 gilt dabei: S1 / S2 < 1, S3 / S4 < 1.

Entsprechend einer alternativen Ausführungsform können sowohl die radial innere Mantelfläche 75, als auch die radial äußere Mantelfläche 76 von zumindest einer der Elektroden 5, 6 in einem einheitlichen oder unterschiedlichen Winkel 77 gegenüber der Vertikalen geneigt ausgebildet sein. Insbesondere kann vorgesehen sein, dass die radial innere und die radial äußere Mantelfläche 75, 76 von wenigstens einer Elektrode 5, 6, welche zwischen einer radial innersten und einer radial äußersten Elektrode 5, 6 der Elektrodenanordnung 3 angeordnet ist/sind, gegenüber der Zentralachse bzw. gegenüber der Zylinder- bzw. Vertikalachse 8 der Elektrodenanordnung winkelig bzw. geneigt ausgebildet ist/sind.

Zweckmäßig ist es demnach, wenn die radial innere und/oder die radial äußere Mantelfläche 75, 76 an bzw. von wenigstens einer der Elektroden 5, 6 in Form einer Mantelfläche eines Kegelstumpfes ausgebildet ist.

Ferner kann vorgesehen sein, dass der sich verjüngende Strömungsquerschnitt 81 zwischen den Mantelflächen 75, 76 von unmittelbar benachbarten Elektroden 5, 6 durch eine vom ersten axialen Ende 78 in Richtung zum zweiten axialen Ende 79 der Elektrodenanordnung 3 stetig oder sprungartig zunehmende Wandstärke 59, 60 von wenigstens einer der Elektroden 5, 6 gebildet ist.

Entsprechend dem in Fig. 11 dargestellten Ausführungsbeispiel kann auch vorgesehen sein, dass die radial innerste, rohrförmige Elektrode 5 bzw. 6 der Elektrodenanordnung 3 über ihre gesamte axiale Länge eine gleichbleibende Wandstärke und einen gleichbleibenden Außendurchmesser aufweist. Gleiches kann für die radial äußerste Elektrode 5 bzw. 6 gelten.

Anstelle oder in Kombination zur beschriebenen, konischen bzw. hohlkegeligen Formgebung von zumindest einer der Elektroden 5, 6 ist es auch möglich, den zumindest einen Strömungskanal 71, welcher sich in Strömungsrichtung des Elektrolyten verjüngt, durch winkelig bzw. geneigt zueinander ausgerichtete, unmittelbar benachbarte Elektroden 5, 6 bzw. Elektrodenpaare auszubilden bzw. zu intensivieren. Insbesondere kann der zumindest eine düsenartig wirkende Strömungskanal 71 auch durch winkelig bzw. geneigt zueinander verlaufende Längsachsen von zumindest zwei unmittelbar benachbarten Elektroden 5, 6 bewerkstelligt sein, insbesondere über eine spitzwinkelige Ausrichtung bzw. Orientierung von unmittelbar benachbarten Oberflächen von Elektroden 5, 6 realisiert sein. Unter den Längsachsen sind die in Strömungsrichtung bzw. in Längsrichtung des Strömungskanals 71 weisenden Achsen der Elektroden 5, 6 zu verstehen.

Aufgrund der Form und/oder Ausrichtung der Elektroden 5, 6 beschleunigt sich die typischerweise turbulente Strömung des Elektrolyten in der Reaktionskammer 2 nach oben. Seine Geschwindigkeit nimmt ständig zu, wodurch die Intensität der Abscheidung der Gasblasen von den Oberflächen der Elektroden 5, 6 erhöht wird. Dadurch wird die effektiv wirksame Fläche der Elektroden 5, 6 vergrößert bzw. möglichst groß gehalten und der ohmsche Widerstand bzw. Spannungsabfall verringert, wodurch der Elektrolyseprozess verbessert wird.

Der Elektrolyt wird vorzugsweise kontinuierlich unter Druck im Bodenabschnitt der inneren Reaktionskammer 69 respektive im Bodenabschnitt der Elektrodenanordnung 3 zugeführt. Die zumindest eine Zulauföffnung 23 für den zirkulierend bewegten Elektrolyten kann nahe der inneren Oberfläche der inneren Reaktionskammer 69 angeordnet und in einem spitzen Winkel zur Oberfläche der inneren Reaktionskammer 69 angeordnet sein. Der Elektrolyt erhält dadurch die Eigenschaften einer gerichteten, insbesondere einer turbulent wirbelnden, schraubenförmig nach oben verlaufenden Strömung.

Der Elektrolyt strömt auch zum Teil annähernd spiralförmig zwischen den Elektroden 5, 6, wobei er ausgehend vom Bodenabschnitt der inneren Reaktionskammer 69 in Richtung zu seinem oberen Rand aufsteigt und die Ablösung der Gasblasen von den Elektroden 5, 6 unterstützt und beschleunigt. Die gerichtete Elektrolytströmung in Kombination mit dem Magnetfeld der zumindest einen elektromagnetischen Spule 13, 70 induziert einen zusätzlichen Ionenstrom im Elektrolyten, der für eine höhere Stromdichte sorgt und zu einer Intensivierung des Prozesses führt.

Der aktive Elektrolytkreislauf 41, welcher die zumindest eine Flüssigkeitspumpe 43 umfasst, bewirkt auch, dass der Elektrolyt vorzugsweise kontinuierlich oder diskontinuierlich über die obere Überlauf- bzw. Begrenzungskante 27, 29 der inneren Reaktionskammer 69, insbesondere des Elektrolytbehälters 30 fließt. Dadurch entsteht eine Art "Elektrolyt-Wasserfall", welcher eine Entgasung des Elektrolyten begünstigt.

Zur Intensivierung der Entgasung des Elektrolyten kann an der Außenfläche der inneren Reaktionskammer 69 zumindest eine Entgasungsvorrichtung 82 installiert bzw. ausgebildet sein, wie dies in Fig. 10 schematisch dargestellt ist. Insbesondere kann in Bezug auf eine Strömungsrichtung des Elektrolyten nach der Überlaufkante 27 des Aufnahmebehälters 4 eine Entgasungsvorrichtung 82 für den Elektrolyten vorgesehen sein.

Die Entgasungsvorrichtung 82 kann eine Reihe von mehrstufigen Kaskaden mit gerippter Oberfläche umfassen, die es ermöglichen, die Elektrolytflüssigkeit in einer dünnen Schicht über die entsprechend vergrößerte Oberfläche zu verteilen und so eine intensive und effektive Entgasung zu gewährleisten. Entsprechend einer zweckmäßigen Ausgestaltung kann die Entgasungsvorrichtung 82 durch zumindest ein sich in radialer Richtung zur Zylinder- bzw. Vertikalachse 8 sich erstreckendes Verteilungselement 83 für den Elektrolyten gebildet sein, welches Verteilungselement 83 zur Vergrößerung der Oberfläche des über die Überlaufkante 27 fließenden Elektrolyten oder zur Bildung eines vergleichsweise dünnen Elektrolyt-Flüssigkeitsfilms an dem Verteilungselement 83 vorgesehen ist. Das Verteilungselement 83 kann dabei ringartig um den Aufnahmebehälter 4 bzw. den Elektrolytbehälter 30 angeordnet sein und ausgehend von seinem radial inneren Abschnitt in Richtung zu seinem radial äußeren Abschnitt nach unten geneigt ausgerichtet sein, sodass ein schwerkraftbedingter Abfluss des gasbeladenen Elektrolyten in Richtung nach unten erfolgt, insbesondere in den Sammelabschnitt 35 gewährleistet ist.

Die Kombination aus der Entgasungsvorrichtung 82 und einem Unterdruck, der von einem Verbraucher oder seiner Einheit, z.B. einer Vakuumpumpe oder einer Brennkammer, aufgebaut wird, entfernt intensiv die Elektrolytbläschen bzw. die im Elektrolyten gelösten Gase, wodurch die an den Verbraucher, beispielsweise eine Verbrennungskraftmaschine 51, gelieferte Gasmenge erhöht und der ohmsche Widerstand des Elektrolyten verringert wird. Dadurch wird die faktische Zellspannung verringert und die Energiebilanz des Prozesses verbessert. Es werden kürzere Freisetzungszeiten der jeweiligen Gase aus dem Elektrolyten erreicht, so dass die Elektroden 5, 6 und ihre wirksamen Oberflächen dem elektrolytischen Prozess in höchstem Maße zur Verfügung stehen.

Nach dem Entgasungsvorgang gelangt der Elektrolyt in den inneren Hohlraum bzw. in den Sammelabschnitt 35 der äußeren Reaktionskammer 2 und durch die zumindest eine Auslassöffnung 36 wieder zurück in den Elektrolytbehälter 30. Dies unter Zwischenschaltung des Flüssigkeitstanks 43 mit einem Reservevolumen an Elektrolyt und gegebenenfalls einer Filtervorrichtung 40. Aus dem Reservevolumen des Flüssigkeitstanks 43 wird der Elektrolyt unter Verwendung der Umwälzpumpe 42 und der zumindest einen leitungsgebundenen Rückführung 37 unter einem vorbestimmten Druck in den Elektrolytbehälter 30 bzw. an die Elektrodenanordnung 3 zurückgeführt.

Ein Satz elektromagnetischer Spulen 13 bzw. Teilwicklungen 19-19'" (Fig. 5 bzw. 9) ist über und/oder unter den Elektroden 5, 6 angeordnet. Die vertikal ausgerichtete, hohlzylindrisch ausgebildete elektromagnetische Spule 70 ist auf die zylindrische Oberfläche der inneren Reaktionskammer 69, welche aus dielektrischem Material gebildet ist, oder auf einen dielektrischen hohlzylindrischen Kern gewickelt, der in axialer Richtung der Zylinder- bzw. Vertikalachse 8 um die innere Reaktionskammer 69 herum angeordnet ist. Die elektromagnetischen Spulen 13, 70 sind während des Betriebs des elektrolytischen Reaktionssystems 1 bevorzugt vollständig in den Elektrolyten eingetaucht.

Im Nachfolgenden wird auf die elektromagnetischen Einheiten gemäß Fig. 5 bzw. Fig. 9 Bezug genommen: Die elektromagnetischen Spulen 13 bzw. deren Teilwicklungen 19-19‴ (Fig. 5 bzw. 9), die sich oberhalb der Elektroden 5, 6 und - als Option - unterhalb der Elektroden 5, 6 befinden, sind auf einen gemeinsamen dielektrischen Ringkern gewickelt. Die Teilwicklungen 19-19‴ sind in Reihe geschaltet mit vorzugsweise 20 Grad Zwischenräumen bzw. Wicklungsabstand 20-20" zwischen benachbarten Teilwicklungen 19-19‴. Jede Teilwicklung 19-19‴ ist fest und lückenlos mit einer maximalen Anzahl von Windungen pro Längen- bzw. Umfangseinheit gewickelt. Die Teilwicklungen 19-19‴ sind lagenweise aufgebaut. Jede Teilwicklung 19-19‴ hat eine ungerade Anzahl von Wicklungslagen.

Die elektromagnetischen Spulen 13 bzw. deren Teilwicklungen 19-19‴ sind an die Stromversorgung bzw. Energiequelle 22 angeschlossen, die gepulste Energie im Bereich von 1 bis 100 Hz liefert. Das elektromagnetische Feld der elektromagnetischen Spule 13 bzw. von deren Teilwicklungen 19-19‴ wirkt auf den Elektrolyten und auf die Elektrodenanordnung 3 ein, wenn diese elektrischer Energie ausgesetzt werden, wodurch die Stromdichte und damit die Effizienz des Elektrolyseprozesses erhöht wird.

Während des Betriebs erzeugt die zumindest eine elektromagnetische Spule 13 bzw. deren Teilwicklungen 19-19‴ ein gepulstes, ungleichmäßiges Magnetfeld. Das Magnetfeld der einander benachbarten Teilwicklungen 19-19‴ überlagert sich im Luftspalt bzw. innerhalb der Wicklungsabstände 20-20" zwischen den Teilwicklungen 19-19"`, wodurch dessen Stärke erhöht wird. Das gepulste Magnetfeld in Kombination mit dem sich bewegenden Elektrolyten induziert eine zusätzliche Bewegung der Ionen im Elektrolyten, was zu einer höheren Stromdichte zwischen den Elektroden 5, 6 führt und die Effizienz des Gasbildungsprozesses erhöht.

Das gepulste elektromagnetische Feld leitet auch Mikro-Vibrationen der Elektroden 5, 6 ein und erzeugt Schockwellen im Elektrolyten, die die Gasblasen von den Elektroden 5, 6 intensiver entfernen und dadurch das Überpotential bzw. die Überspannungen an den Elektroden 5, 6 verringern. Aufgebrachte Überspannungsenergie geht nämlich in der Regel als Wärme verloren, trägt also nicht zum Stoffumsatz bei.

Die vertikale hohlzylindrische Spule 70 ist auf der zylindrischen Oberfläche der inneren Reaktionskammer 69 aus dielektrischem Material montiert. Die vertikale Höhe der hohlzylindrischen Spule 70 liegt im gleichen Bereich wie die vertikale Höhe der Elektroden 5, 6. Die gepulste Energiezufuhr wird mit einem Netzteil gewährleistet, das in einem Frequenzbereich von 1 bis 100 Hz arbeitet.

Während des Betriebs der vertikalen elektromagnetischen Spule 70 erhalten die Elektroden 5, 6 die Eigenschaften des Metallkerns dieser Spule 70. Der durch die innere Reaktionskammer 69 fließende magnetische Fluss ändert sich mit der Zeit und führt somit zur elektromagnetischen Induktion an den Elektroden 5, 6. Da die Elektroden 5, 6 elektrisch voneinander isoliert sind und sich radial auf unterschiedlichen Durchmessern befinden, erhalten sie auch ein unterschiedliches elektrisches Potential, wodurch die Potentialdifferenz zwischen den Elektroden 5, 6 entsteht, was den elektrolytischen Prozess verstärkt. Darüber hinaus wird im Bereich der Wechselwirkung der elektromagnetischen Felder der hohlzylindrischen elektromagnetischen Spule 70 mit den elektromagnetischen Feldern der ringförmigen Spule(n) 13 auch ein Synergieeffekt erzielt, der den beschriebenen Effekt verstärkt.

Die Magnetfelder der oberen/unteren Magnetspulen 13 und der vertikalen elektromagnetischen Spule 70 induzieren eine Schleppkraft, die auf die Gasblasen im Elektrolyten wirkt und die Ablösung der Blasen von der Elektrodenoberfläche unterstützt. Die Ablösegeschwindigkeit der Blasen wird beschleunigt. Die steigende Ablösegeschwindigkeit reduziert die Verweilzeit der Blasen auf der Oberfläche der Elektroden5, 6 und verringert die Blasenbedeckung, wodurch das Überpotential bzw. die Überspannung an den Elektroden 5, 6 verringert und die Effizienz der Gasproduktion verbessert wird. In der Zwischenzeit wird eine Reduzierung des ohmschen Widerstandes bzw. des Spannungsabfalls an der isolierenden Blasenschicht auf der Elektrodenoberfläche erreicht.

Die Wechselwirkung der elektromagnetischen Felder der elektromagnetischen Spulen13, 70 mit der lokalen Stromdichte induziert einen zusätzlichen Elektrolytfluss, der die Bildung von Wasserstoff- und Sauerstoffgas beeinflusst. Eine erhöhte Stromdichte sorgt für mehr Wasserstoffproduktion bei geringerem Energiebedarf. Die magnetisch induzierte Strömung reduziert die Diffusionsschichtdicke und verbessert den Stofftransport im Elektrolyten. Die Wechselwirkung des gepulsten ungleichmäßigen Magnetfeldes und des sich bewegenden Elektrolyten führt zu einer magnetohydrodynamischen Konvektion des Elektrolyten, wodurch die Effizienz des Elektrolyseprozesses verbessert und der Energieverbrauch gesenkt werden kann.

Die Ausführungsbeispiele zeigen mögliche Ausführungsvarianten des elektrolytischen Reaktionssystems 1 wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvarianten möglich sind, vom Schutzumfang mit umfasst.

Der Ordnung halber sei abschließend darauf hingewiesen, dass zum besseren Verständnis des Aufbaus elektrolytischen Reaktionssystems 1 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2; 3; 4; 5; 6, 7; 8; 9; 10, 11 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Reaktionssystem | | |
| 2 | Reaktionskammer | | |
| 3 | Elektrodenanordnung | 36 | Auslassöffnung |
| 3' | Elektrodenanordnung | 37 | Rückführung |
| 4 | Aufnahmebehälter | 38 | Flüssigkeitstank |
| 5 | Elektrode (anodisch) | 39 | Wasserbehälter |
| | | 40 | Filtervorrichtung |
| 6 | Elektrode (kathodisch) | | |
| 7 | Fächerachse | 41 | Elektrolytkreislauf |
| 8 | bzw. Vertikalachse | 42 | Flüssigkeitspumpe |
| 9,9' | Zylinder-Abstand | 43 | Kühlvorrichtung |
| 10 | Spreizungswinkel | 44 | Wärmetauscher |
| 11 | Freistellung | 45 | Zufluss |
| 12 | radialer Abstand | 46 | Abfluss |
| 13 | elektromagnetische Spule | 47 | Durchtrittsöffnung |
| 14 | Flüssigkeitsstand (min.) | 48 | Umgebungsluft |
| 15 | Zentrums- bzw. Mittelpunkt | 49 | Regulierungsmittel |
| 16 | Mittelebene | 50 | Mittel (Unterdruckerzeugung) |
| 17 | Wicklungskörper | 51 | Verbrennungskraftmaschine |
| 18 | Spulenwicklung | 52 | Verbindung |
| 19 | Teilwicklung | 53 | Brennstoffzuführung |
| 19' | Teilwicklung | 54 | Abstand |
| 19" | Teilwicklung | 55 | Abstand |
| 19‴ | Teilwicklung | 56 | Rohrachse |
| 20 | Wicklungsabstand | 57 | Spalt |
| 20' | Wicklungsabstand | 58 | Spalt |
| 20" | Wicklungsabstand | 59 | Wandstärke |
| 21 | Energiequelle | 60 | Wandstärke |
| 22 | Energiequelle | 61 | Schlitz |
| 23 | Zulauföffnung | 62 | Schlitz |
| 24 | Mittel (Verwirbelung) | 63 | Umfangswinkel |
| 25 | Ansaug- und/oder Auslassdüsen | 64 | Ringumfang |
| | | | |
| 26 | Gasraum | 65 | Freiwinkel |
| 27 | Überlaufkante | 66 | Versatzwinkel |
| 28 | Füssigkeitsstand (max.) | 67 | Spulenanschluss |
| 29 | Begrenzungskante | 68 | Spulenanschluss |
| 30 | Elektrolytbehälter | 69 | innere Reaktionskammer |
| 31 | Zylinderachse | 70 | hohlzylindrische Spule |
| 32 | Schaum | 71 | Strömungskanal |
| 33 | Füllstand | 72 | äußere Mantelfläche |
| 34 | Ablaufkanal | 73 | axiale Höhe |
| 35 | Sammelabschnitt | 74 | vertikale Länge |
| 75 | innere Mantelfläche | | |
| 76 | äußere Mantelfläche | | |
| 77 | Winkel | | |
| 78 | erstes axiales Ende | | |
| 79 | zweites axiales Ende | | |
| 80 | erster Strömungsquerschnitt | | |
| | | | |
| 81 | zweiter Strömungsquerschnitt | | |
| 82 | Entgasungsvorrichtung | | |
| 83 | Verteilungselement | | |

## Patentansprüche

1. Elektrolytisches Reaktionssystem (1) zur Erzeugung von gasförmigem Wasserstoff und Sauerstoff, umfassend
- eine Reaktionskammer (2, 69) zur Aufnahme eines Elektrolyten,
- eine Elektrodenanordnung (3) in der Reaktionskammer (2, 69), welche Elektrodenanordnung (3) aus einer Mehrzahl von anodischen und kathodischen Elektroden (5, 6) gebildet ist,
- wobei die Elektrodenanordnung (3) durch koaxial oder annähernd koaxial angeordnete, rohrförmige Elektroden (5, 6) gebildet ist, wobei die zylindrischen Mantelflächen oder die aus mehreren, winkelig zueinander ausgerichteten Flächen zusammengesetzten Mantelflächen der einander benachbart angeordneten, rohrförmigen Elektroden (5, 6) durch zumindest einen Spalt (57, 58) zueinander beabstandet angeordnet sind, sodass zwischen Mantelflächen zueinander beanstandeter Elektroden (5, 6) wenigstens einen Strömungskanal (71) für den Elektrolyten ausgebildet ist, der sich zwischen einem ersten axialen Ende (78) für den Eintritt des Elektrolyten in die Elektrodenanordnung (3) und einem zweiten axialen Ende (79) für den Austritt des Elektrolyten aus der Elektrodenanordnung (3) erstreckt,
- wobei der wenigstens eine Strömungskanal (71) wenigstens einen ersten Strömungsquerschnitt (80) und wenigstens einen zweiten Strömungsquerschnitt (81) aufweist, wobei der zweite Strömungsquerschnitt (81) kleiner bemessen ist als der erste Strömungsquerschnitt (80),
- und wobei der vergleichsweise kleinere zweite Strömungsquerschnitt (81) in einem zum zweiten axialen Ende (79) der Elektrodenanordnung (3) näherliegenden Teilabschnitt des wenigstens einen Strömungskanals (71) ausgebildet ist,
**dadurch gekennzeichnet, dass**
der zumindest eine Spalt (57, 58) zwischen unmittelbar benachbarten Elektroden (5, 6) im Bereich des in Vertikalrichtung unteren, ersten axialen Endes (78) der Elektrodenanordnung (3) maximal oder größer ist als im Bereich des in Vertikalrichtung oberen, zweiten axialen Endes (79) der Elektrodenanordnung (3), und dieser zumindest eine Spalt (57, 58) im Bereich des in Vertikalrichtung oberen, zweiten axialen Endes (79) der Elektrodenanordnung (3) minimal oder kleiner ist.

2. Elektrolytisches Reaktionssystem nach Anspruch 1, **dadurch gekennzeichnet, dass** der sich verjüngende Strömungsquerschnitt (81) durch eine vom ersten axialen Ende (78) in Richtung zum zweiten axialen Ende (79) stetig oder sprungartig zunehmende Wandstärke (59, 60) von wenigstens einer der Elektroden (5, 6) gebildet ist.

3. Elektrolytisches Reaktionssystem nach Anspruch 1 oder 2, **dadurch gekennzeichnet, dass** eine radial innere und/oder eine radial äußere Mantelfläche (75, 76) von zumindest einer Elektrode (5, 6), welche zwischen einer radial innersten und einer radial äußersten Elektrode (5, 6) der Elektrodenanordnung (3) angeordnet ist, gegenüber einer Zylinder- bzw. Vertikalachse (8) der Elektrodenanordnung (3) geneigt ausgebildet ist/sind.

4. Elektrolytisches Reaktionssystem nach einem der vorhergehenden Ansprüche, **dadurch gekennzeichnet, dass** die radial innerste, rohrförmige Elektrode (5, 6) der Elektrodenanordnung (3) über ihre gesamte vertikale Länge (74) eine gleichbleibende Wandstärke (59) und einen gleichbleibenden Außendurchmesser aufweist.

5. Elektrolytisches Reaktionssystem nach einem der vorhergehenden Ansprüche, **dadurch gekennzeichnet, dass** eine radial innere und/oder eine radial äußere Mantelfläche (75, 76) von wenigstens einer der Elektroden (5, 6) in Form einer Mantelfläche eines Kegelstumpfes ausgebildet ist.

6. Elektrolytisches Reaktionssystem nach einem der vorhergehenden Ansprüche, **dadurch gekennzeichnet, dass** in axialer Richtung einer virtuellen Zylinder- bzw. Vertikalachse (8) der Elektrodenanordnung (3) oberhalb und/oder unterhalb der Elektrodenanordnung (3) wenigstens eine elektromagnetische Spule (13) angeordnet ist, deren elektromagnetisches Feld bei Beaufschlagung mit elektrischer Energie auf den Elektrolyten und auf die Elektrodenanordnung (3) einwirkt.

7. Elektrolytisches Reaktionssystem nach einem der vorhergehenden Ansprüche, **dadurch gekennzeichnet, dass** in der Reaktionskammer (2) ein hohlzylindrischer oder hohlprismatischer Aufnahmebehälter (4), insbesondere ein Elektrolytbehälter (30) ausgebildet ist, in welchem die wenigstens eine rohrförmige Elektrodenanordnung (3) angeordnet ist.

8. Elektrolytisches Reaktionssystem nach Anspruch 7, **dadurch gekennzeichnet, dass** der Elektrolytbehälter (30) oder der Aufnahmebehälter (4) für den Elektrolyten und für die wenigstens eine Elektrodenanordnung (3) im oberen Endabschnitt offen ausgeführt ist und dessen Mantel- oder Zylinderfläche von den inneren Wandflächen der Reaktionskammer (2) beabstandet angeordnet ist.

9. Elektrolytisches Reaktionssystem nach einem der Ansprüche 6 bis 8, **dadurch gekennzeichnet, dass** die wenigstens eine Elektrodenanordnung (3) vollständig in den Elektrolyten eingetaucht ist und die wenigstens eine elektromagnetische Spule (13, 70) gleichfalls unterhalb eines regulären oder minimalen Flüssigkeitsstandes (14) für den Elektrolyten liegt oder zumindest überwiegend in den Elektrolyten eingetaucht ist.

10. Elektrolytisches Reaktionssystem nach einem der Ansprüche 6 bis 9, **dadurch gekennzeichnet, dass** das elektromagnetische Feld der wenigstens einen elektromagnetischen Spule (13, 70) die anodischen und kathodischen Elektroden (5, 6) derart in mechanische Schwingungen versetzt, dass eine Ablösung von an den anodischen und kathodischen Elektroden (5, 6) entstehenden oder anhaftenden Gasblasen unterstützt ist.

11. Elektrolytisches Reaktionssystem nach einem der Ansprüche 6 bis 10, **dadurch gekennzeichnet, dass** die wenigstens eine elektromagnetische Spule (13) in Draufsicht im Wesentlichen ringförmig ausgebildet ist und ihr Zentrums- bzw. Mittelpunkt (15) auf oder nahe der virtuellen Zylinder- bzw. Vertikalachse (8) der Elektrodenanordnung (3) liegt.

12. Elektrolytisches Reaktionssystem nach einem der vorhergehenden Ansprüche, **dadurch gekennzeichnet, dass** im unteren Abschnitt der Reaktionskammer (2, 69) oder eines den Elektrolyten aufnehmenden Aufnahmebehälters (4) zumindest eine Zulauföffnung (23) zur Zuführung und/oder Nachfüllung des Elektrolyten angeordnet ist.

13. Elektrolytisches Reaktionssystem nach einem der vorhergehenden Ansprüche, **dadurch gekennzeichnet, dass** in der Reaktionskammer (2, 69) oder in einem den Elektrolyten aufnehmenden Aufnahmebehälter (4) zumindest ein Mittel (24) zur Verwirbelung des Elektrolyten, insbesondere zum Aufbau einer Strömung, beispielsweise einer turbulenten oder wirbelartigen Strömung, im Elektrolyten ausgebildet ist.

14. Elektrolytisches Reaktionssystem nach Anspruch 13, **dadurch gekennzeichnet, dass** das Mittel (24) zur Verwirbelung durch wenigstens eine Ansaug- und/oder Auslassdüse (25), bevorzugt durch eine Mehrzahl von in die Reaktionskammer (2, 69) oder in den Aufnahmebehälter (4) des Elektrolyten führende Ansaug- und/oder Auslassdüsen (25) für den Elektrolyten gebildet ist.

15. Elektrolytisches Reaktionssystem nach einem der vorhergehenden Ansprüche, **dadurch gekennzeichnet, dass** in der Reaktionskammer (2, 69) zumindest eine Überlaufkante (27) zur Begrenzung oder Festlegung eines maximalen Flüssigkeitsstandes (28) des Elektrolyten ausgebildet ist.

16. Elektrolytisches Reaktionssystem nach Anspruch 15, **dadurch gekennzeichnet, dass** im Bodenabschnitt der Reaktionskammer (2) wenigstens eine Auslassöffnung (36) zur Ableitung von über die Überlaufkante (27) geflossenem Elektrolyt oder Elektrolytschaum aus der Reaktionskammer (2) ausgebildet ist.

17. Elektrolytisches Reaktionssystem nach Anspruch 15, **gekennzeichnet durch** eine Rückführung (37) von über die Überlaufkante (27) geflossenem Elektrolyt in den Aufnahmebehälter (4), insbesondere in den hohlzylindrischen Elektrolytbehälter (30).

18. Elektrolytisches Reaktionssystem nach Anspruch 15, **gekennzeichnet durch** Ausbildung eines Sammelabschnittes (35) für über die Überlaufkante (27) geflossenen Elektrolyten innerhalb der Reaktionskammer (2) oder innerhalb einer in die Reaktionskammer (2) führenden Rückführung (37) für den Elektrolyten, zur Bildung eines Gasverschlusses, insbesondere einer siphonartigen Gassperre für den erzeugten Wasserstoff und Sauerstoff.

19. Elektrolytisches Reaktionssystem nach einem der vorhergehenden Ansprüche, **gekennzeichnet durch** Aufbau von Unterdruck in der Reaktionskammer (2) durch Aufbau einer strömungstechnischen Verbindung (52) zwischen der Reaktionskammer (2), insbesondere dessen Gasraum (26), mit einer Brennstoffzuführung (53), insbesondere dem Ansaugsystem, einer Verbrennungskraftmaschine (51), insbesondere eines Benzin-, Gas- oder Dieselmotors.

20. Elektrolytisches Reaktionssystem nach einem der vorhergehenden Ansprüche, **dadurch gekennzeichnet, dass** an einer äußeren Mantelfläche (72) der Reaktionskammer (2, 69) oder des Aufnahmebehälters (4), oder an einem dielektrischen Wicklungsträger um die Reaktionskammer (2, 69) oder den Aufnahmebehälter (4) eine ein- oder mehrlagige, hohlzylindrisch ausgebildete, elektromagnetische Spule (70) angebracht ist, deren elektromagnetisches Feld bei Beaufschlagung mit elektrischer Energie auf den Elektrolyten und auf die Elektrodenanordnung (3) einwirkt.

21. Elektrolytisches Reaktionssystem nach einem der Ansprüche 15 bis 20, **dadurch gekennzeichnet, dass** in Bezug auf eine Strömungsrichtung des Elektrolyten nach der Überlaufkante (27) der Reaktionskammer (69) respektive des Aufnahmebehälters (4) eine Entgasungsvorrichtung (82) für den Elektrolyten ausgebildet ist.

22. Elektrolytisches Reaktionssystem nach Anspruch 21, **dadurch gekennzeichnet, dass** die Entgasungsvorrichtung (82) durch zumindest ein sich in radialer Richtung zur Zylinder- bzw. Vertikalachse (8) sich erstreckendes Verteilungselement (83) für den Elektrolyten gebildet ist, welches Verteilungselement (83) zur Vergrößerung der Oberfläche des über die Überlaufkante (27) fließenden Elektrolyten oder zur Bildung eines Elektrolyt-Flüssigkeitsfilms an dem Verteilungselement (83) vorgesehen ist.

23. Elektrolytisches Reaktionssystem nach Anspruch 22, **dadurch gekennzeichnet, dass** das Verteilungselement (83) ringförmig um den die Reaktionskammer (69) respektive den Aufnahmebehälter (4) angeordnet ist und ausgehend von seinem radial inneren Abschnitt in Richtung zu seinem radial äußeren Abschnitt nach unten geneigt ausgerichtet ist.

24. Elektrolytisches Reaktionssystem nach Anspruch 22 oder 23, **dadurch gekennzeichnet, dass** das Verteilungselement (83) eine treppen- oder wellenförmig verlaufende Oberfläche zur Verteilung und Ableitung des Elektrolyten aufweist.

## Claims

1. Electrolytic reaction system (1) for producing gaseous hydrogen and oxygen, comprising
- a reaction chamber (2, 69) for accommodating an electrolyte,
- an electrode arrangement (3) in the reaction chamber (2, 69), which electrode arrangement (3) is formed of a plurality of anodic and cathodic electrodes (5, 6),
- wherein the electrode arrangement (3) is formed by tubular electrodes (5, 6) arranged coaxially or approximately coaxially, wherein the cylindrical lateral surfaces or lateral surfaces composed of multiple surfaces oriented at an angle to one another, of the adjacently arranged tubular electrodes (5, 6) are arranged at a distance from one another by at least one gap (57, 58), so that at least one flow channel (71) for the electrolyte is formed between the lateral surfaces of electrodes (5, 6) spaced apart from one another, which flow channel (71) extends between a first axial end (78) for admitting the electrolyte into the electrode arrangement (3) and a second axial end (79) for discharging the electrolyte from the electrode arrangement (3),
- wherein the at least one flow channel (71) has at least one first flow cross-section (80) and at least one second flow cross-section (81), wherein the second flow cross-section (81) has a smaller size than the first flow cross-section (80),
- and wherein the comparatively smaller second flow cross-section (81) is formed in a partial section of the at least one flow channel (71) located closer to the second axial end (79) of the electrode arrangement (3),
**characterized in that**
the at least one gap (57, 58) between directly adjacent electrodes (5, 6) is at maximum and/or greater in the region of the bottom, as viewed in the vertical direction, first axial end (78) of the electrode arrangement (3) than in the region of the top, as viewed in the vertical direction, second axial end (79) of the electrode arrangement (3), and this at least one gap (57, 58) is at minimum or smaller in the region of the top, as viewed in the vertical direction, second axial end (79) of the electrode arrangement (3).

2. The electrolytic reaction system according to claim 1, **characterized in that** the tapering flow cross-section (81) is formed by a wall thickness (59, 60) of at least one of the electrodes (5, 6), which wall thickness (59, 60) steadily or abruptly increases from the first axial end (78) in the direction towards the second axial end (79).

3. The electrolytic reaction system according to claim 1 or 2, **characterized in that** a radially inner and/or a radially outer lateral surface (75, 76) of at least one electrode (5, 6), which is arranged between a radially innermost and a radially outermost electrode (5, 6) of the electrode arrangement (3), is/are formed to be inclined with respect to a cylinder and/or vertical axis (8) of the electrode arrangement (3).

4. The electrolytic reaction system according to one of the preceding claims, **characterized in that** the radially innermost, tubular electrode (5, 6) of the electrode arrangement (3) has a consistent wall thickness (59) and a consistent outer diameter across its entire vertical length (74).

5. The electrolytic reaction system according to one of the preceding claims, **characterized in that** a radially inner and/or a radially outer lateral surface (75, 76) of at least one of the electrodes (5, 6) is formed in the form of a lateral surface of a frustum.

6. The electrolytic reaction system according to one of the preceding claims, **characterized in that** in the axial direction of a virtual cylinder and/or vertical axis (8) of the electrode arrangement (3), at least one electromagnetic coil (13) is arranged above and/or below the electrode arrangement (3), the electromagnetic field of which acts on the electrolyte and on the electrode arrangement (3) when supplied with electrical energy.

7. The electrolytic reaction system according to one of the preceding claims, **characterized in that** in the reaction chamber (2), a hollow-cylindrical or hollow-prismatic holding container (4), in particular an electrolyte container (30) is formed, in which the at least one tubular electrode arrangement (3) is arranged.

8. The electrolytic reaction system according to claim 7, **characterized in that** the electrolyte container (30) or the holding container (4) for the electrolyte and for the at least one electrode arrangement (3) is configured to be open in the upper end section and the lateral and/or cylinder surface of which is arranged so as to be spaced apart from the inner wall surfaces of the reaction chamber (2).

9. The electrolytic reaction system according to one of claims 6 to 8, **characterized in that** the at least one electrode arrangement (3) is completely submersed in the electrolyte, and the at least one electromagnetic coil (13, 70) likewise lies below a regular or minimal fluid level (14) for the electrolyte or is at least largely submersed in the electrolyte.

10. The electrolytic reaction system according to one of claims 6 to 9, **characterized in that** the electromagnetic field of the at least one electromagnetic coil (13, 70) makes the anodic and cathodic electrodes (5, 6) oscillate mechanically such that a detachment of gas bubbles forming on or adhering to the anodic and cathodic electrodes (5, 6) is supported.

11. The electrolytic reaction system according to one of claims 6 to 10, **characterized in that** the at least one electromagnetic coil (13) has an annular design in a top view, and its central and/or mid-point (15) lies one or close to the virtual cylinder and/or vertical axis (8) of the electrode arrangement (3).

12. The electrolytic reaction system according to one of the preceding claims, **characterized in that** at least one inlet orifice (23) for introducing and/or filling up the electrolyte is arranged in the bottom section of the reaction chamber (2, 69) or of a holding container (4) accommodating the electrolyte.

13. The electrolytic reaction system according to one of the preceding claims, **characterized in that** at least one means (24) for creating turbulence in the electrolyte, in particular for creating a flow, for example a turbulent or whirl-like flow, in the electrolyte is formed in the reaction chamber (2, 69) or in a holding container (4) accommodating the electrolyte.

14. The electrolytic reaction system according to claim 13, **characterized in that** the means (24) for creating a turbulence is formed by at least one intake and/or outlet nozzle (25), preferably by a plurality of intake and/or outlet nozzles (25) for the electrolyte leading into the reaction chamber (2, 69) or into the holding container (4) of the electrolyte.

15. The electrolytic reaction system according to one of the preceding claims, **characterized in that** at least one overflow edge (27) for limiting or determining a maximum fluid level (28) of the electrolyte is formed in the reaction chamber (2, 69).

16. The electrolytic reaction system according to claim 15, **characterized in that** at least one outlet orifice (36) is formed in the base section of the reaction chamber (2) for discharging electrolyte or electrolyte foam which has flowed over the overflow edge (27) out of the reaction chamber (2).

17. The electrolytic reaction system according to claim 15, **characterized by** a return line (37) for electrolyte which has flowed over the overflow edge (27) into the holding container (4), in particular into the hollow-cylindrical electrolyte container (30).

18. The electrolytic reaction system according to claim 15, **characterized by** forming a collection section (35) for electrolyte which has flowed over the overflow edge (27) inside the reaction chamber (2) or inside a return line (37) for the electrolyte leading into the reaction chamber (2), for forming a gas lock, in particular a siphon-type gas barrier for the generated hydrogen and oxygen.

19. The electrolytic reaction system according to one of the preceding claims, **characterized by** generating negative pressure in the reaction chamber (2) by establishing a fluidic connection (52) between the reaction chamber (2), in particular its gas chamber (26), with a fuel intake line (53), in particular the suction system, of an internal combustion engine (51), in particular a petrol, gas or diesel engine.

20. The electrolytic reaction system according to one of the preceding claims, **characterized in that** a one- or multi-layered electromagnetic coil (70) with a hollow-cylindrical design is attached on an outer lateral surface (72) of the reaction chamber (2, 69) or of the holding container (4), or on a dielectric winding carrier around the reaction chamber (2, 69) or the holding container (4), the electromagnetic field of which electromagnetic coil (70) acts on the electrolyte and on the electrode arrangement (3) when supplied with electrical energy.

21. The electrolytic reaction system according to one of claims 15 to 20, **characterized in that** a degassing device (82) for the electrolyte is formed after the overflow edge (27) of the reaction chamber (69) and/or the holding container (4) when viewed in a flow direction of the electrolyte.

22. The electrolytic reaction system according to claim 21, **characterized in that** the degassing device (82) is formed by at least one distributing element (83) for the electrolyte extending in the radial direction to the cylinder and/or vertical axis (8), which distributing element (83) is provided for enlarging the surface of the electrolyte flowing over the overflow edge (27) or for forming an electrolyte fluid film on the distributing element (83).

23. The electrolytic reaction system according to claim 22, **characterized in that** the distributing element (83) is arranged annularly around the reaction chamber (69) and/or the holding container (4) and is oriented so as to be inclined downwardly starting from its radially inner section in the direction towards its radially outer section.

24. The electrolytic reaction system according to claim 22 or 23, **characterized in that** the distributing element (83) has a surface extending in a stair- or wave-shape for distributing and discharging the electrolyte.

## Revendications

1. Système de réaction électrolytique (1) pour la production d'hydrogène et d'oxygène sous forme gazeuse, comprenant
- une chambre de réaction (2, 69) pour le logement d'un électrolyte,
- une disposition d'électrodes (3) dans la chambre de réaction (2, 69), cette disposition d'électrodes (3) étant constituée d'une pluralité d'électrodes anodiques et cathodiques (5, 6),
- dans lequel la disposition d'électrodes (3) est constituée d'électrodes tubulaires (5, 6) disposées de manière coaxiale ou approximativement coaxiale, dans lequel les surfaces d'enveloppe cylindriques ou les surfaces d'enveloppe, constituées de plusieurs surfaces orientées de manière angulaire entre elles, des électrodes tubulaires (5, 6), disposées de manière adjacente entre elles, sont disposées de manière distante entre elles grâce à au moins un interstice (57, 58), de sorte que, entre les surfaces d'enveloppe d'électrodes (5, 6) distantes entre elles, au moins un canal d'écoulement (71) pour l'électrolyte est formé, qui s'étend entre une première extrémité axiale (78) pour l'entrée de l'électrolyte dans la disposition d'électrodes (3) et une deuxième extrémité axiale (79) pour la sortie de l'électrolyte hors de la disposition d'électrodes (3),
- dans lequel l'au moins un canal d'écoulement (71) présente au moins une première section transversale d'écoulement (80) et au moins une deuxième section transversale d'écoulement (81), dans lequel la deuxième section transversale d'écoulement (81) est plus petite qua la première section transversale d'écoulement (80),
- et dans lequel la deuxième section transversale d'écoulement (81) relativement plus petite est réalisée dans une partie de l'au moins un canal d'écoulement (71) plus proche de la deuxième extrémité axiale (79) de la disposition d'électrodes (3),
**caractérisé en ce que**
l'au moins un interstice (57, 58) est maximal entre des électrodes (5, 6) immédiatement adjacentes au niveau de la première extrémité axiale (78), en bas dans la direction verticale, de la disposition d'électrodes (3) ou est plus grand qu'au niveau de la deuxième extrémité axiale (79), en haut dans la direction verticale, de la disposition d'électrodes (3) et cet au moins un interstice (57, 58) est minimal ou plus petite au niveau de la deuxième extrémité axiale (79), en haut dans la direction verticale, de la disposition d'électrodes (3).

2. Système de réaction électrolytique selon la revendication 1, **caractérisé en ce que** la section transversale d'écoulement (81), qui se rétrécit, est constituée d'une épaisseur de paroi (59, 60) augmentant, constamment ou par sauts, de la première extrémité axiale (78) vers la deuxième extrémité axiale (79), d'au moins une des électrodes (5, 6).

3. Système de réaction électrolytique selon la revendication 1 ou 2, **caractérisé en ce qu'**une surface d'enveloppe radialement interne et/ou radialement externe (75, 76) d'au moins une électrode (5, 6), qui est disposée entre une électrode (5, 6) la plus interne radialement et une électrode la plus externe radialement de la disposition d'électrodes (3), est réalisée de façon à être inclinée par rapport à un axe de cylindre ou vertical (8) de la disposition d'électrodes (3).

4. Système de réaction électrolytique selon l'une des revendications précédentes, **caractérisé en ce que** l'électrode tubulaire (5, 6) la plus interne radialement de la disposition d'électrodes (3) présente, sur toute sa longueur verticale (74), une épaisseur de paroi (59) constante et un diamètre extérieur constant.

5. Système de réaction électrolytique selon l'une des revendications précédentes, **caractérisé en ce qu'**une surface d'enveloppe radialement interne et/ou radialement externe (75, 76) d'au moins une électrode (5, 6) se présente sous la forme d'une surface d'enveloppe d'un cône tronqué.

6. Système de réaction électrolytique selon l'une des revendications précédentes, **caractérisé en ce que**, dans la direction axiale d'un axe de cylindre ou vertical (8) virtuel de la disposition d'électrodes (3), au-dessus et/ou en dessous de la disposition d'électrodes (3), est disposée au moins une bobine électromagnétique (13) dont le champ électromagnétique agit, lors d'une alimentation en énergie électrique, sur l'électrolyte et sur la disposition d'électrodes (3).

7. Système de réaction électrolytique selon l'une des revendications précédentes, **caractérisé en ce que**, dans la chambre de réaction (2) un récipient de logement cylindrique creux ou prismatique creux (4), plus particulièrement un récipient d'électrolyte (30) est réalisé, dans lequel l'au moins une disposition d'électrodes tubulaires (3) est disposée.

8. Système de réaction électrolytique selon la revendication 7, **caractérisé en ce que** le récipient d'électrolyte (30) ou le récipient de logement (4) pour l'électrolyte et pour l'au moins une disposition d'électrodes (3) est réalisé de façon à être ouverte dans la portion d'extrémité supérieure et sa surface d'enveloppe ou cylindrique est disposée de manière distante par rapport aux surfaces de parois internes de la chambre de réaction (2).

9. Système de réaction électrolytique selon l'une des revendications 6 à 8, **caractérisé en ce que** l'au moins une disposition d'électrodes (3) est entièrement immergée dans l'électrolyte et l'au moins une bobine électromagnétique (13, 70) se trouve également en dessous d'un niveau de liquide régulier ou minimal (14) pour l'électrolyte ou est immergé au moins majoritairement dans l'électrolyte.

10. Système de réaction électrolytique selon l'une des revendications 6 à 9, **caractérisé en ce que** le champ électromagnétique de l'au moins une bobine électromagnétique (13, 70) soumet les électrodes anodiques et cathodiques (5, 6) à des vibrations mécaniques de façon à favoriser le détachement de bulles de gaz qui apparaissent ou qui adhèrent aux électrodes anodiques et cathodiques (5, 6).

11. Système de réaction électrolytique selon l'une des revendications 6 à 10, **caractérisé en ce que** l'au moins une bobine électromagnétique (13) est réalisée de manière globalement annuaire en vue de dessus et sont centre ou point central (15) se trouve sur ou près de l'axe de cylindre ou vertical (8) virtuel de la disposition d'électrodes (3).

12. Système de réaction électrolytique selon l'une des revendications précédentes, **caractérisé en ce que**, dans la portion inférieure de la chambre de réaction (2, 69) ou d'un récipient de logement (4) contenant l'électrolyte, est disposée au moins une ouverture d'entrée (23) pour l'introduction et/ou le remplissage de l'électrolyte.

13. Système de réaction électrolytique selon l'une des revendications précédentes, **caractérisé en ce que**, dans la chambre de réaction (2, 69) ou dans un récipient de logement (4) contenant l'électrolyte, est disposé au moins un moyen (24) pour le tourbillonnement de l'électrolyte, plus particulièrement pour la formation d'un écoulement, par exemple un écoulement turbulent ou tourbillonnaire, dans l'électrolyte.

14. Système de réaction électrolytique selon la revendication 13, **caractérisé en ce que** le moyen (24) pour le tourbillonnement est constitué d'au moins une buse d'aspiration et/ou de sortie (25), de préférence d'une pluralité de buses d'aspiration et/ou de sortie (25) pour l'électrolyte, guidant l'électrolyte vers la chambre de réaction (2, 69) ou vers le récipient de logement (4).

15. Système de réaction électrolytique selon l'une des revendications précédentes, **caractérisé en ce que**, dans la chambre de réaction (2, 69), est réalisée au moins une arête de trop-plein (27) pour la limitation ou la définition d'un niveau de liquide maximal (28) de l'électrolyte.

16. Système de réaction électrolytique selon la revendication 15, **caractérisé en ce que**, dans la portion de fond de la chambre de réaction (2), est réalisée au moins une ouverture de sortie (36) pour l'évacuation de l'électrolyte ou de la mousse d'électrolyte s'écoulant au-dessus de l'arête de trop-plein (27) hors de la chambre de réaction (2).

17. Système de réaction électrolytique selon la revendication 15, **caractérisé par** un retour (37) de l'électrolyte écoulé au-dessus de l'arête de trop-plein (27) vers le récipient de logement (4), plus particulièrement vers le récipient d'électrolyte cylindrique creux (30).

18. Système de réaction électrolytique selon la revendication 15, **caractérisé par** la formation d'une portion de collecte (35) pour l'électrolyte écoulé au-dessus de l'arête de trop-plein (27) à l'intérieur de la chambre de réaction (2) à l'intérieur d'un retour (37) menant vers la chambre de réaction (2), pour l'électrolyte, afin de former un obturateur de gaz, plus particulièrement un blocage de gaz en forme de siphon pour l'hydrogène et l'oxygène produits.

19. Système de réaction électrolytique selon l'une des revendications précédentes, **caractérisé par** l'établissement d'une dépression dans la chambre de réaction (2) par l'établissement d'une liaison par écoulement (52) entre la chambre de réaction (2), plus particulièrement son compartiment à gaz (26), et une alimentation en carburant (53), plus particulièrement le système d'aspiration, d'un moteur à combustion interne (51), plus particulièrement d'un moteur à essence, à gaz ou diesel.

20. Système de réaction électrolytique selon l'une des revendications précédentes, **caractérisé en ce que**, sur une surface d'enveloppe externe (72) de la chambre de réaction (2, 69) ou du récipient de logement (4), ou sur un support de spires diélectriques autour de la chambre de réaction (2, 69) ou du récipient de logement (4), est montée une bobine électromagnétique (70) monocouche ou multicouche, réalisée sous une forme cylindrique creuse, dont le champ électromagnétique agit, lors d'une alimentation en énergie électrique, sur l'électrolyte et sur la disposition d'électrodes (3).

21. Système de réaction électrolytique selon l'une des revendications 15 à 20, **caractérisé en ce que**, par rapport à une direction d'écoulement de l'électrolyte après l'arête de trop-plein (27) de la chambre de réaction (69), respectivement du récipient de logement (4), un dispositif de dégazage (82) est prévu pour l'électrolyte.

22. Système de réaction électrolytique selon la revendication 21, **caractérisé en ce que** le dispositif de dégazage (82) est constitué d'au moins un élément de répartition (83) pour l'électrolyte s'étendant dans la direction radiale vers l'axe de cylindre ou vertical (8), cet élément de répartition (83) étant prévu pour l'agrandissement de la surface de l'électrolyte s'écoulant au-dessus de l'arête de trop-plein (27) ou pour la formation d'un film liquide d'électrolyte sur l'élément de répartition (83).

23. Système de réaction électrolytique selon la revendication 22, **caractérisé en ce que** l'élément de répartition (83) est disposé de manière annulaire autour de la chambre de réaction (69), respectivement le récipient de logement (4), et est orienté, à partir de sa portion radialement interne, de manière inclinée vers le bas en direction de sa portion radialement externe.

24. Système de réaction électrolytique selon la revendication 22 ou 23, **caractérisé en ce que** l'élément de répartition (83) présente une surface en escaliers ou ondulée pour la répartition et l'évacuation de l'électrolyte.
